# EUROPEAN PATENT APPLICATION

(11) **EP 3 125 182 A1**
(43) Date of publication of application: **01.02.2017**
(21) Application number: 16153644.6
(22) Date of filing: 01.02.2016
(51) Int. Cl.: G06Q 20/20, G06Q 20/32

(54) **MOBILE TERMINAL AND METHOD FOR CONTROLLING CANCELLATION OF PAYMENT**

(30) Priority: 25.07.2015 KR 20150105405
(71) Applicant: LG Electronics Inc., Seoul 07336 (KR)
(72) Inventor: CHO, Taehoon, 06772 Seoul (KR); JEONG, Jaewoo, 06772 Seoul (KR)
(74) Representative: Ter Meer Steinmeister & Partner

(57) **Abstract**

The present disclosure relates to a mobile terminal including a body (100), a touchscreen (151) coupled to the body (100), a short-range communication unit (114) and a controller (180) configured to cause the touchscreen (151) to display receipt information associated with a payment made via a first payment terminal (200) and transmit, via the short-range communication unit (114), information associated with cancellation of the payment to a second payment terminal (200) while the receipt information associated with the payment is displayed on the touchscreen (151).

## Description

### BACKGROUND OF THE INVENTION

### 1. Field of the invention

The present disclosure relates to a mobile terminal capable of performing short-range communication and a control method thereof.

### 2. Description of the related art

Terminals may be generally classified into mobile/portable terminals or stationary terminals according to their mobility. Mobile terminals may also be classified as handheld terminals or vehicle mounted terminals according to whether or not a user can directly carry the terminal.

Mobile terminals have become increasingly more functional. Examples of such functions include data and voice communications, capturing images and video via a camera, recording audio, playing music files via a speaker system, and displaying images and video on a display. Some mobile terminals include additional functionality which supports game playing, while other terminals are configured as multimedia players. More recently, mobile terminals have been configured to receive broadcast and multicast signals which permit viewing of content such as videos and television programs.

As it becomes multifunctional, a mobile terminal can be allowed to capture still images or moving images, play music or video files, play games, receive broadcast and the like, so as to be implemented as an integrated multimedia player.

Efforts are ongoing to support and increase the functionality of mobile terminals. Such efforts include software and hardware improvements, as well as changes and improvements in the structural components.

In recent years, developments on a function for performing a payment in a more convenient manner using a mobile terminal have been actively carried out. For an example, the function may include a payment service function using short-range communication (for example, near field communication (NFC)).

On the other hand, as the payment service function has been actively carried out, the need of development of a function capable of cancelling payment has been increased.

### SUMMARY OF THE INVENTION

An aspect of the present disclosure is to provide a mobile terminal and a control method thereof capable of cancelling a payment in an optimal method.

Another aspect of the present disclosure is to provide a mobile terminal and a control method thereof capable of providing an optimal user interface/user experience (UI/UX) capable of cancelling a payment through short-range communication.

In order to accomplish the foregoing objective, a mobile terminal according to an embodiment of the present disclosure may include a body, a touchscreen coupled to the body, a short-range communication unit and a controller configured to: cause the touchscreen to display receipt information associated with a payment made via a first payment terminal and transmit, via the short-range communication unit, information associated with cancellation of the payment to a second payment terminal while the receipt information associated with the payment is displayed on the touchscreen.

According to an embodiment, the controller may transmit, via the short-range communication unit, the information in response to user input received at the mobile terminal.

According to an embodiment, the controller may transmit, via the short-range communication unit, the information in response to the mobile terminal entering a communication range of the second payment terminal.

According to an embodiment, the controller may transmit, via the short-range communication unit, the information in response to authentication of a cancellation request at the mobile terminal.

According to an embodiment, the transmitting of the information causes cancellation of the payment.

According to an embodiment, the receipt information is one or more of a paid payment amount, paid product information, payment method information used for the payment, or payment method information different from the payment method information used for the payment.

According to an embodiment, the first payment terminal is same as the second payment terminal.

According to an embodiment, the controller may determine that the mobile terminal has entered a communication range of the second terminal based on a specific signal received from the second terminal via the short-range communication unit, and the transmitting of the information associated with the cancellation of the payment occurs in response to the determining that the mobile terminal has entered the communication range.

According to an embodiment, the controller may cause the touchscreen to display cancellation receipt information associated with cancellation of the payment when information associated with a completed cancellation is received from the second terminal subsequent to transmitting the information associated with the cancellation of the payment.

According to an embodiment, the receipt information and the cancellation receipt information are displayed simultaneously for a period of time on the touchscreen.

According to an embodiment, the controller may cause the touchscreen to display information associated with the payment when the mobile enters communication range with the second payment terminal via the short-range communication unit, wherein the type of the displayed information associated with the payment varies based on whether a preset condition is satisfied.

According to an embodiment, the present condition is at least one of whether or not any payment corresponding to the receipt information is within a reference time subsequent to the execution thereof, whether or not mobile terminal is out of the communication range, whether the second terminal is the first terminal, or whether a payment with the first terminal has been carried out.

According to an embodiment, the controller may cause the touchscreen to display first screen information associated with the payment when the preset condition is not satisfied and cause the touchscreen to display second screen information associated with the payment when the preset condition is satisfied, wherein the second screen information is different from the first screen information.

According to an embodiment, the first screen information includes an image corresponding to payment method information, and the second screen information includes at least one of the image or a graphic object for notifying that the receipt information exists.

According to an embodiment, the controller may cause the touchscreen to display the receipt information associated with the payment when the mobile is within communication range with the second payment terminal via the short-range communication unit.

According to an embodiment, the controller may cause the touchscreen to display receipt information based on a preset type of touch applied to the touchscreen, cause the touchscreen to display different screen information associated with receipt information based on a type of touch applied to the touchscreen, and the controller may cause the touchscreen to display one receipt information when a preset first type of touch is applied thereto, and to display a list including at least one receipt information when a preset second type of touch different from the preset first type of touch is applied thereto.

According to an embodiment, controller may transmit via the short-range communication unit information associated with the cancellation of the payment corresponding to the at least one receipt information to the POS terminal through the short-range communication unit when the mobile terminal enters the region subsequent to selecting the at least one receipt information.

According to an embodiment, the controller may perform a different operation based on screen information displayed on the touchscreen when the body enters the region, and the controller may perform a first operation when the mobile terminal enters the region while the one receipt information is displayed on the touchscreen and perform a second operation different from the first operation when the mobile terminal enters the region while a list including at least one receipt information is displayed on the touchscreen, wherein the first operation is an operation of transmitting information associated with the cancellation of a payment corresponding to the displayed receipt information to the POS terminal, and the second operation is an operation of controlling the touchscreen to display receipt information associated with a payment that has been carried out through the POS terminal among the at least one receipt information in a visually differentiated manner from the remaining receipt information.

According to an embodiment, the receipt information includes a first image corresponding to payment method information, and the first image is changed to a second image corresponding to a different payment method based on a preset type of touch applied thereto, and wherein the controller may transmit via the short-range communication unit the different payment method information to the second terminal to perform the payment again with the different payment method when the body enters the region in a state that the first image contained in the receipt information has been changed to the second image.

According to an embodiment, the receipt information includes product information, and the controller may transmit via the short-range communication unit information associated with the cancellation of the payment, and information associated with a payment of a remaining product information other than at least one product information, when the mobile terminal enters the region while the at least one product information included in the receipt information is selected.

Further scope of applicability of the present invention will become apparent from the detailed description given hereinafter. However, it should be understood that the detailed description and specific examples such as preferred embodiments of the invention are given by way of illustration only, since various changes and modifications within the spirit and scope of the invention will become apparent to those skilled in the art from this detailed description.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 A is a block diagram for explaining a mobile terminal associated with the present disclosure;
FIGS. 1 B and 1C are conceptual views in which an example of a mobile terminal associated with the present disclosure is seen from different directions;
FIG. 2 is a conceptual view for explaining a service associated with near field communication (NFC) applied to the present disclosure;
FIG. 3 is a conceptual view schematically illustrating a payment system according to an embodiment of the present disclosure;
FIG. 4 is a flow chart representatively illustrating a control method of the present disclosure;
FIG. 5 is a conceptual view for explaining the control method illustrated in FIG. 4;
FIG. 6 is a flow chart for explaining a method of performing a payment according to an embodiment of the present disclosure;
FIGS. 7A and 7B are conceptual views for explaining the method illustrated in FIG. 6;
FIG. 8 is a flow chart for explaining a method of cancelling a payment according to an embodiment of the present disclosure;
FIG. 9 is a conceptual view for explaining the method illustrated in FIG. 8;
FIG. 10 is a flow chart for explaining a method of displaying different screen information associated with a payment based on whether or not a preset condition is satisfied when a mobile terminal according to an embodiment of the present disclosure enters a region capable of short-range communication with a POS terminal;
FIGS. 11 A, 11 B and 11C are conceptual views for explaining the method illustrated in FIG. 10;
FIG. 12 is a flow chart for explaining a method of displaying different type of receipt information based on a preset type of touch applied to a mobile terminal according to an embodiment of the present disclosure;
FIGS. 13A, 13B and 13C are conceptual views for explaining the method illustrated in FIG. 12;
FIG. 14 is a flow chart for explaining a method of cancelling a payment using a list containing at least one receipt information according to an embodiment of the present disclosure;
FIG. 15 is a conceptual view for explaining the method illustrated in FIG. 14;
FIG. 16 is a flow chart for explaining a method of performing repayment excluding at least part of product information contained in receipt information using the receipt information according to an embodiment of the present disclosure;
FIGS. 17A and 17B are conceptual views for explaining the method illustrated in FIG. 16; and
FIGS. 18A and 18B are conceptual views for explaining a method of displaying receipt information and cancellation receipt information associated with the present disclosure.

### DETAILED DESCRIPTION OF THE INVENTION

Description will now be given in detail according to the exemplary embodiments disclosed herein, with reference to the accompanying drawings. For the sake of brief description with reference to the drawings, the same or equivalent components will be provided with the same reference numbers, and description thereof will not be repeated. A suffix "module" and "unit" used for constituent elements disclosed in the following description is merely intended for easy description of the specification, and the suffix itself does not give any special meaning or function. In describing the present disclosure, if a detailed explanation for a related known function or construction is considered to unnecessarily divert the gist of the present disclosure, such explanation has been omitted but would be understood by those skilled in the art. The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

It will be understood that, although the terms first, second, etc. may be used herein to describe various elements, these elements should not be limited by these terms. These terms are only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation as far as it represents a definitely different meaning from the context.

Terms 'include' or 'has' used herein should be understood that they are intended to indicate an existence of several components or several steps, disclosed in the specification, and it may also be understood that part of the components or steps may not be included or additional components or steps may further be included.

Mobile terminals described herein may include cellular phones, smart phones, laptop computers, digital broadcasting terminals, personal digital assistants (PDAs), portable multimedia players (PMPs), navigators, slate PCs, tablet PCs, ultra books, wearable devices (for example, smart watches, smart glasses, head mounted displays (HMDs)), and the like.

However, it may be easily understood by those skilled in the art that the configuration according to the exemplary embodiments of this specification can also be applied to stationary terminals such as a digital TV, a desktop computer, a digital signage and the like, excluding a case of being applicable only to the mobile terminals.

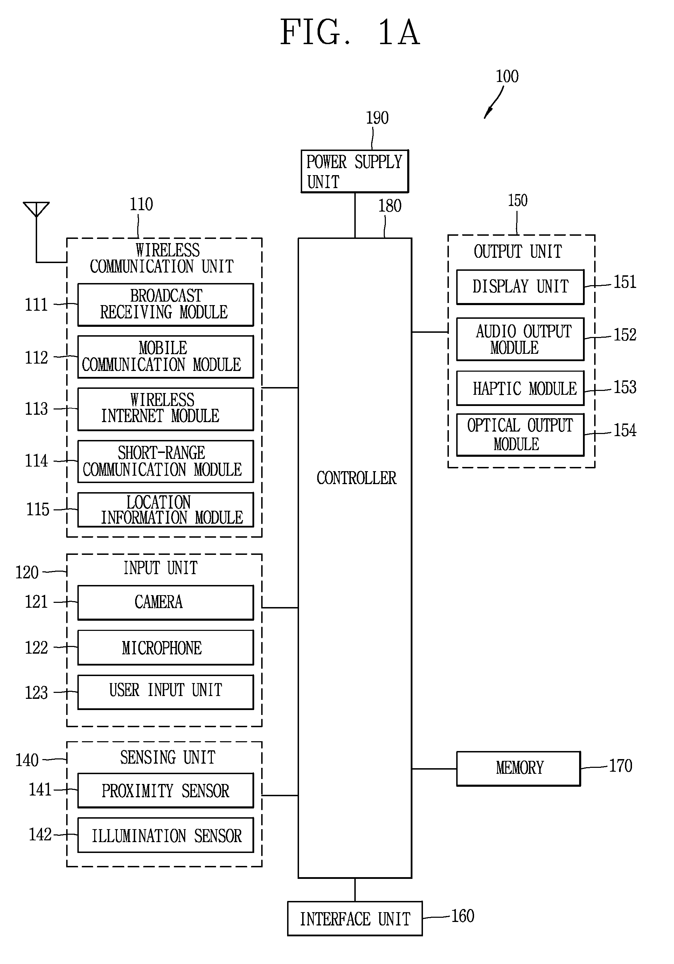

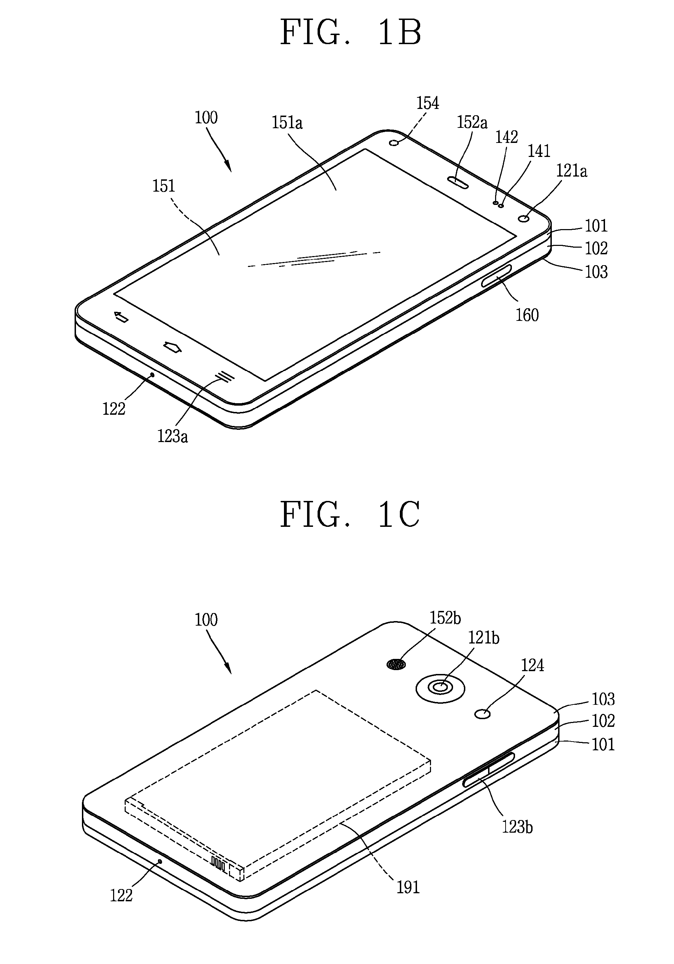

Referring to FIGS. 1A through 1C, FIG. 1A is a block diagram of a mobile terminal in accordance with the present disclosure, FIGS. 1B and 1C are conceptual views of one example of the mobile terminal, viewed from different directions.

The mobile terminal 100 may include components, such as a wireless communication unit 110, an input unit 120, a sensing unit 140, an output unit 150, an interface unit 160, a memory 170, a controller 180, a power supply unit 190 and the like. FIG. 1 illustrates the mobile terminal having various components, but it may be understood that implementing all of the illustrated components is not a requirement. Greater or fewer components may alternatively be implemented.

In more detail, the wireless communication unit 110 of those components may typically include one or more modules which permit wireless communications between the mobile terminal 100 and a wireless communication system, between the mobile terminal 100 and another mobile terminal 100, or between the mobile terminal 100 and a network within which another mobile terminal 100 (or an external server) is located.

For example, the wireless communication unit 110 may include at least one of a broadcast receiving module 111, a mobile communication module 112, a wireless Internet module 113, a short-range communication module 114, a location information module 115 and the like.

The input unit 120 may include a camera 121 for inputting an image signal, a microphone 122 or an audio input module for inputting an audio signal, or a user input unit 123 (for example, a touch key, a push key (or a mechanical key), etc.) for allowing a user to input information. Audio data or image data collected by the input unit 120 may be analyzed and processed by a user's control command.

The sensing unit 140 may include at least one sensor which senses at least one of internal information of the mobile terminal, a surrounding environment of the mobile terminal and user information. For example, the sensing unit 140 may include a proximity sensor 141, an illumination sensor 142, a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, refer to the camera 121), a microphone 122, a battery gage, an environment sensor (for example, a barometer, a hygrometer, a thermometer, a radiation detection sensor, a thermal sensor, a gas sensor, etc.), and a chemical sensor (for example, an electronic nose, a health care sensor, a biometric sensor, etc.). On the other hand, the mobile terminal disclosed herein may utilize information in such a manner of combining information sensed by at least two sensors of those sensors.

The output unit 150 may be configured to output an audio signal, a video signal or a tactile signal. The output unit 150 may include a display unit 151, an audio output module 152, a haptic module 153, an optical output module 154 and the like. The display unit 151 may have an inter-layered structure or an integrated structure with a touch sensor so as to implement a touch screen. The touch screen may provide an output interface between the mobile terminal 100 and a user, as well as functioning as the user input unit 123 which provides an input interface between the mobile terminal 100 and the user.

The interface unit 160 may serve as an interface with various types of external devices connected with the mobile terminal 100. The interface unit 160, for example, may include wired or wireless headset ports, external power supply ports, wired or wireless data ports, memory card ports, ports for connecting a device having an identification module, audio input/output (I/O) ports, video I/O ports, earphone ports, or the like. The mobile terminal 100 may execute an appropriate control associated with a connected external device, in response to the external device being connected to the interface unit 160.

Furthermore, the memory 170 may store data for supporting various functions of the mobile terminal 100. The memory 170 may store a plurality of application programs (or applications) executed in the mobile terminal 100, data for operations of the mobile terminal 100, instruction words, and the like. At least some of those application programs may be downloaded from an external server via wireless communication. Some others of those application programs may be installed within the mobile terminal 100 at the time of being shipped for basic functions of the mobile terminal 100 (for example, receiving a call, placing a call, receiving a message, sending a message, etc.). On the other hand, the application programs may be stored in the memory 170, installed in the mobile terminal 100, and executed by the controller 180 to perform an operation (or a function) of the mobile terminal 100.

The controller 180 may typically control an overall operation of the mobile terminal 100 in addition to the operations associated with the application programs. The controller 180 may provide or process information or functions appropriate for a user in a manner of processing signals, data, information and the like, which are input or output by the aforementioned components, or activating the application programs stored in the memory 170.

The controller 180 may control at least part of the components illustrated in FIG. 1 A, in order to drive the application programs stored in the memory 170. In addition, the controller 180 may drive the application programs by combining at least two of the components included in the mobile terminal 100 for operation.

The power supply unit 190 may receive external power or internal power and supply appropriate power required for operating respective elements and components included in the mobile terminal 100 under the control of the controller 180. The power supply unit 190 may include a battery, and the battery may be an embedded battery or a replaceable battery.

At least part of those elements and components may be combined to implement operation and control of the mobile terminal or a control method of the mobile terminal according to various exemplary embodiments described herein. Also, the operation and control or the control method of the mobile terminal may be implemented in the mobile terminal in such a manner of activating at least one application program stored in the memory 170.

Hereinafter, each aforementioned component will be described in more detail with reference to FIG. 1, prior to explaining various exemplary embodiments implemented by the mobile terminal 100 having the configuration.

First, the wireless communication unit 110 will be described. The broadcast receiving module 111 of the wireless communication unit 110 may receive a broadcast signal and/or broadcast associated information from an external broadcast managing entity via a broadcast channel. The broadcast channel may include a satellite channel and a terrestrial channel. At least two broadcast receiving modules 111 may be provided in the mobile terminal 100 to simultaneously receive at least two broadcast channels or switch the broadcast channels.

The mobile communication module 112 may transmit/receive wireless signals to/from at least one of network entities, for example, a base station, an external mobile terminal, a server, and the like, on a mobile communication network, which is constructed according to technical standards or transmission methods for mobile communications (for example, Global System for Mobile Communication (GSM), Code Division Multi Access (CDMA), Wideband CDMA (WCDMA), High Speed Downlink Packet access (HSDPA), Long Term Evolution (LTE), Long Term Evolution-Advanced (LTE-A), etc.)

The wireless signals may include audio call signal, video (telephony) call signal, or various formats of data according to transmission/reception of text/multimedia messages.

The wireless Internet module 113 denotes a module for wireless Internet access. This module may be internally or externally coupled to the mobile terminal 100. The wireless Internet module 113 may transmit/receive wireless signals via communication networks according to wireless Internet technologies.

Examples of such wireless Internet access may include Wireless LAN (WLAN), Wireless Fidelity (Wi-Fi) Direct, Digital Living Network Alliance (DLNA), Wireless Broadband (Wibro), Worldwide Interoperability for Microwave Access (Wimax), High Speed Downlink Packet Access (HSDPA), High Speed Uplink Packet Access (HSUPA), Long Term Evolution (LTE), Long Term Evolution-Advanced (LTE-A) and the like. The wireless Internet module 113 may transmit/receive data according to at least one wireless Internet technology within a range including even Internet technologies which are not aforementioned.

From the perspective that the wireless Internet accesses according to Wibro, HSDPA, GSM, CDMA, WCDMA, LTE, LTE-A and the like are executed via a mobile communication network, the wireless Internet module 113 which performs the wireless Internet access via the mobile communication network may be understood as a type of the mobile communication module 112.

The short-range communication module 114 denotes a module for short-range communications. Suitable technologies for implementing the short-range communications may include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless Universal Serial Bus (Wireless USB), Magnetic Secure Transmission (MST) and the like. The short-range communication module 114 may support wireless communications between the mobile terminal 100 and a wireless communication system, between the mobile terminal 100 and another mobile terminal 100, or between the mobile terminal and a network where another mobile terminal 100 (or an external server) is located, via wireless personal area networks.

Here, the another mobile terminal 100 may be a wearable device, for example, a smart watch, a smart glass or a head mounted display (HMD), which is able to exchange data with the mobile terminal 100 (or to cooperate with the mobile terminal 100). The short-range communication module 114 may sense (recognize) a wearable device, which is able to communicate with the mobile terminal), near the mobile terminal 100. In addition, when the sensed wearable device is a device which is authenticated to communicate with the mobile terminal 100 according to the present disclosure, the controller 180 may transmit at least part of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user may check the received message using the wearable device.

The location information module 115 denotes a module for detecting or calculating a position of the mobile terminal. An example of the location information module 115 may include a Global Position System (GPS) module or a Wireless Fidelity (Wi-Fi) module. For example, when the mobile terminal uses the GPS module, a position of the mobile terminal may be acquired using a signal sent from a GPS satellite. As another example, when the mobile terminal uses the Wi-Fi module, a position of the mobile terminal may be acquired based on information related to a wireless access point (AP) which transmits or receives a wireless signal to or from the Wi-Fi module. As needed, the location information module 115 may perform any function of another module of the wireless communication unit 110 to obtain data for the location of the mobile terminal in a substituted or additional manner. The location information module 115, as a module used to acquire the location (or current location) of the mobile terminal, may not be necessarily limited to a module for directly calculating or acquiring the location of the mobile terminal.

Next, the input unit 120 may be configured to provide an audio or video signal (or information) input to the mobile terminal or information input by a user to the mobile terminal. For the input of the audio information, the mobile terminal 100 may include one or a plurality of cameras 121. The camera 121 may process image frames of still pictures or video obtained by image sensors in a video call mode or a capture mode. The processed image frames may be displayed on the display unit 151. On the other hand, the plurality of cameras 121 disposed in the mobile terminal 100 may be arranged in a matrix configuration. By use of the cameras 121 having the matrix configuration, a plurality of image information having various angles or focal points may be input into the mobile terminal 100. Also, the plurality of cameras 121 may be arranged in a stereoscopic structure to acquire a left image and a right image for implementing a stereoscopic image.

The microphone 122 may process an external audio signal into electric audio data. The processed audio data may be utilized in various manners according to a function being executed in the mobile terminal 100 (or an application program being executed). On the other hand, the microphone 122 may include assorted noise removing algorithms to remove noise generated in the course of receiving the external audio signal.

The user input unit 123 may receive information input by a user. When information is input through the user input unit 123, the controller 180 may control an operation of the mobile terminal 100 to correspond to the input information. The user input unit 123 may include a mechanical input element (or a mechanical key, for example, a button located on a front/rear surface or a side surface of the mobile terminal 100, a dome switch, a jog wheel, a jog switch, etc.), and a touch-sensitive input means. As one example, the touch-sensitive input means may be a virtual key, a soft key or a visual key, which is displayed on a touch screen through software processing, or a touch key which is disposed on a portion except for the touch screen. On the other hand, the virtual key or the visual key may be displayable on the touch screen in various shapes, for example, graphic, text, icon, video or a combination thereof.

The sensing unit 140 may sense at least one of internal information of the mobile terminal, surrounding environment information of the mobile terminal and user information, and generate a sensing signal corresponding to it. The controller 180 may control an operation of the mobile terminal 100 or execute data processing, a function or an operation associated with an application program installed in the mobile terminal based on the sensing signal. Hereinafter, description will be given in more detail of representative sensors of various sensors which may be included in the sensing unit 140.

First, a proximity sensor 141 refers to a sensor to sense presence or absence of an object approaching to a surface to be sensed, or an object disposed near a surface to be sensed, by using an electromagnetic field or infrared rays without a mechanical contact. The proximity sensor 141 may be arranged at an inner region of the mobile terminal covered by the touch screen, or near the touch screen. The proximity sensor 141 may have a longer lifespan and a more enhanced utility than a contact sensor.

The proximity sensor 141, for example, may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, the proximity sensor 141 may sense proximity of a pointer to the touch screen by changes of an electromagnetic field, which is responsive to an approach of an object with conductivity. In this case, the touch screen (touch sensor) may be categorized into a proximity sensor.

Hereinafter, for the sake of brief explanation, a status that the pointer is positioned to be proximate onto the touch screen without contact will be referred to as 'proximity touch,' whereas a status that the pointer substantially comes in contact with the touch screen will be referred to as 'contact touch.' For the position corresponding to the proximity touch of the pointer on the touch screen, such position will correspond to a position where the pointer faces perpendicular to the touch screen upon the proximity touch of the pointer. The proximity sensor 141 may sense proximity touch, and proximity touch patterns (e.g., distance, direction, speed, time, position, moving status, etc.). On the other hand, the controller 180 may process data (or information) corresponding to the proximity touches and the proximity touch patterns sensed by the proximity sensor 141, and output visual information corresponding to the process data on the touch screen. In addition, the controller 180 may control the mobile terminal 100 to execute different operations or process different data (or information) according to whether a touch with respect to the same point on the touch screen is either a proximity touch or a contact touch.

A touch sensor may sense a touch (or touch input) applied onto the touch screen (or the display unit 151) using at least one of various types of touch methods, such as a resistive type, a capacitive type, an infrared type, a magnetic field type, and the like.

As one example, the touch sensor may be configured to convert changes of pressure applied to a specific part of the display unit 151 or a capacitance occurring from a specific part of the display unit 151, into electric input signals. Also, the touch sensor may be configured to sense not only a touched position and a touched area, but also touch pressure. Here, a touch object is an object to apply a touch input onto the touch sensor. Examples of the touch object may include a finger, a touch pen, a stylus pen, a pointer or the like.

When touch inputs are sensed by the touch sensors, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180 or the controller 180 itself.

On the other hand, the controller 180 may execute a different control or the same control according to a type of an object which touches the touch screen (or a touch key provided in addition to the touch screen). Whether to execute the different control or the same control according to the object which gives a touch input may be decided based on a current operating state of the mobile terminal 100 or a currently executed application program.

Meanwhile, the touch sensor and the proximity sensor may be executed individually or in combination, to sense various types of touches, such as a short (or tap) touch, a long touch, a multi-touch, a drag touch, a flick touch, a pinch-in touch, a pinch-out touch, a swipe touch, a hovering touch, and the like.

An ultrasonic sensor may be configured to recognize position information relating to a sensing object by using ultrasonic waves. The controller 180 may calculate a position of a wave generation source based on information sensed by an illumination sensor and a plurality of ultrasonic sensors. Since light is much faster than ultrasonic waves, a time for which the light reaches the optical sensor may be much shorter than a time for which the ultrasonic wave reaches the ultrasonic sensor. The position of the wave generation source may be calculated using the fact. In more detail, the position of the wave generation source may be calculated by using a time difference from the time that the ultrasonic wave reaches based on the light as a reference signal.

The camera 121 constructing the input unit 120 may be a type of camera sensor (for example, CCD, CMOS, etc.) The camera sensor may include at least one of a photo sensor and a laser sensor.

The camera 121 and the laser sensor may be combined to detect a touch of the sensing object with respect to a 3D stereoscopic image. The photo sensor may be laminated on the display device. The photo sensor may be configured to scan a movement of the sensing object in proximity to the touch screen. In more detail, the photo sensor may include photo diodes and transistors at rows and columns to scan content placed on the photo sensor by using an electrical signal which changes according to the quantity of applied light. Namely, the photo sensor may calculate the coordinates of the sensing object according to variation of light to thus obtain position information of the sensing object.

The display unit 151 may output information processed in the mobile terminal 100. For example, the display unit 151 may display execution screen information of an application program driven in the mobile terminal 100 or user interface (UI) and graphic user interface (GUI) information in response to the execution screen information.

The display unit 151 may also be implemented as a stereoscopic display unit for displaying stereoscopic images.

The stereoscopic display unit 152 may employ a stereoscopic display scheme such as stereoscopic scheme (a glass scheme), an auto-stereoscopic scheme (glassless scheme), a projection scheme (holographic scheme), or the like.

The audio output module 152 may output audio data received from the wireless communication unit 110 or stored in the memory 160 in a call signal reception mode, a call mode, a record mode, a voice recognition mode, a broadcast reception mode, and the like. Also, the audio output module 152 may also provide audible output signals related to a particular function (e.g., a call signal reception sound, a message reception sound, etc.) performed by the mobile terminal 100. The audio output module 152 may include a receiver, a speaker, a buzzer or the like.

A haptic module 153 may generate various tactile effects the that user may feel. A typical example of the tactile effect generated by the haptic module 153 may be vibration. Strength, pattern and the like of the vibration generated by the haptic module 153 may be controllable by a user selection or setting of the controller. For example, the haptic module 153 may output different vibrations in a combining manner or a sequential manner.

Besides vibration, the haptic module 153 may generate various other tactile effects, including an effect by stimulation such as a pin arrangement vertically moving with respect to a contact skin, a spray force or suction force of air through a jet orifice or a suction opening, a touch on the skin, a contact of an electrode, electrostatic force, etc., an effect by reproducing the sense of cold and warmth using an element that can absorb or generate heat, and the like.

The haptic module 153 may be implemented to allow the user to feel a tactile effect through a muscle sensation such as the user's fingers or arm, as well as transferring the tactile effect through a direct contact. Two or more haptic modules 153 may be provided according to the configuration of the mobile terminal 100.

An optical output module 154 may output a signal for indicating an event generation using light of a light source. Examples of events generated in the mobile terminal 100 may include a message reception, a call signal reception, a missed call, an alarm, a schedule notice, an email reception, an information reception through an application, and the like.

A signal output by the optical output module 154 may be implemented in such a manner that the mobile terminal emits monochromatic light or light with a plurality of colors. The signal output may be terminated as the mobile terminal senses a user's event checking.

The interface unit 160 may serve as an interface with every external device connected with the mobile terminal 100. For example, the interface unit 160 may receive data transmitted from an external device, receive power to transfer to each element within the mobile terminal 100, or transmit internal data of the mobile terminal 100 to an external device. For example, the interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (referred to as 'identifying device', hereinafter) may take the form of a smart card. Accordingly, the identifying device may be connected with the terminal 100 via the interface unit 160.

When the mobile terminal 100 is connected with an external cradle, the interface unit 160 may serve as a passage to allow power from the cradle to be supplied to the mobile terminal 100 therethrough or may serve as a passage to allow various command signals input by the user from the cradle to be transferred to the mobile terminal therethrough. Various command signals or power input from the cradle may operate as signals for recognizing that the mobile terminal is properly mounted on the cradle.

The memory 170 may store programs for operations of the controller 180 and temporarily store input/output data (for example, phonebook, messages, still images, videos, etc.). The memory 170 may store data related to various patterns of vibrations and audio which are output in response to touch inputs on the touch screen.

The memory 170 may include at least one type of storage medium including a Flash memory, a hard disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 170 over the Internet.

As aforementioned, the controller 180 may typically control the general operations of the mobile terminal 100. For example, the controller 180 may set or release a lock state for restricting a user from inputting a control command with respect to applications when a status of the mobile terminal meets a preset condition.

The controller 180 may also perform controlling and processing associated with voice calls, data communications, video calls, and the like, or perform pattern recognition processing to recognize a handwriting input or a picture drawing input performed on the touch screen as characters or images, respectively. In addition, the controller 180 may control one or combination of those components in order to implement various exemplary embodiment disclosed herein on the mobile terminal 100.

The power supply unit 190 may receive external power or internal power and supply appropriate power required for operating respective elements and components included in the mobile terminal 100 under the control of the controller 180. The power supply unit 190 may include a battery. The battery may be an embedded battery which is rechargeable or be detachably coupled to the terminal body for charging.

The power supply unit 190 may include a connection port. The connection port may be configured as one example of the interface unit 160 to which an external (re)charger for supplying power to recharge the battery is electrically connected.

As another example, the power supply unit 190 may be configured to recharge the battery in a wireless manner without use of the connection port. Here, the power supply unit 190 may receive power, transferred from an external wireless power transmitter, using at least one of an inductive coupling method which is based on magnetic induction or a magnetic resonance coupling method which is based on electromagnetic resonance.

On the other hand, various embodiments described herein may be implemented in a computer-readable or its similar medium using, for example, software, hardware, or any combination thereof.

Referring to FIGS. 1 B and 1C, the mobile terminal 100 disclosed herein may be provided with a bar-type terminal body. However, the present disclosure may not be limited to this, but also may be applicable to various structures such as watch type, clip type, glasses type or folder type, flip type, slide type, swing type, swivel type, or the like, in which two and more bodies are combined with each other in a relatively movable manner. The description to be associated with a specific type of mobile terminal or on a specific type of mobile terminal will be also typically applied to another type of mobile terminal.

Here, the terminal body may be understood as a conception which indicates the mobile terminal 100 as at least one assembly.

The mobile terminal 100 may include a case (casing, housing, cover, etc.) forming the appearance of the terminal. In this embodiment, the case may be divided into a front case 101 and a rear case 102. Various electronic components may be incorporated into a space formed between the front case 101 and the rear case 102. At least one middle case may be additionally disposed between the front case 101 and the rear case 102

A display unit 151 may be disposed on a front surface of the terminal body to output information. As illustrated, a window 151 a of the display unit 151 may be mounted to the front case 101 so as to form the front surface of the terminal body together with the front case 101.

In some cases, electronic components may also be mounted to the rear case 102. Examples of those electronic components mounted to the rear case 102 may include a detachable battery, an identification module, a memory card and the like. Here, a rear cover 103 for covering the electronic components mounted may be detachably coupled to the rear case 102. Therefore, when the rear cover 103 is detached from the rear case 102, the electronic components mounted to the rear case 102 may be externally exposed.

As illustrated, when the rear cover 103 is coupled to the rear case 102, a side surface of the rear case 102 may be partially exposed. In some cases, upon the coupling, the rear case 102 may also be completely shielded by the rear cover 103. On the other hand, the rear cover 103 may include an opening for externally exposing a camera 121 b or an audio output module 152b.

The cases 101, 102, 103 may be formed by injection-molding synthetic resin or may be formed of a metal, for example, stainless steel (STS), titanium (Ti), or the like.

Unlike the example which the plurality of cases form an inner space for accommodating such various components, the mobile terminal 100 may be configured such that one case forms the inner space. In this example, a mobile terminal 100 having a uni-body formed in such a manner that synthetic resin or metal extends from a side surface to a rear surface may also be implemented.

On the other hand, the mobile terminal 100 may include a waterproofing unit (not shown) for preventing an introduction of water into the terminal body. For example, the waterproofing unit may include a waterproofing member which is located between the window 151 a and the front case 101, between the front case 101 and the rear case 102, or between the rear case 102 and the rear cover 103, to hermetically seal an inner space when those cases are coupled.

The mobile terminal may include a display unit 151, first and second audio output modules 152a and 152b, a proximity sensor 141, an illumination sensor 152, an optical output module 154, first and second cameras 121 a and 121 b, first and second manipulation units 123a and 123b, a microphone 122, an interface unit 160 and the like.

Hereinafter, description will be given of an exemplary mobile terminal 100 that the display unit 151, the first audio output module 152a, the proximity sensor 141, the illumination sensor 142, the optical output module 154, the first camera 121 a and the first manipulation unit 123a are disposed on the front surface of the terminal body, the second manipulation unit 123b, the microphone 122 and the interface unit 160 are disposed on a side surface of the terminal body, and the second audio output module 152b and the second camera 121 b are disposed on a rear surface of the terminal body, with reference to FIGS. 1 B and 1C.

Here, those components may not be limited to the arrangement, but be excluded or arranged on another surface if necessary. For example, the first manipulation unit 123a may not be disposed on the front surface of the terminal body, and the second audio output module 152b may be disposed on the side surface other than the rear surface of the terminal body.

The display unit 151 may output information processed in the mobile terminal 100. For example, the display unit 151 may display execution screen information of an application program driven in the mobile terminal 100 or user interface (UI) and graphic user interface (GUI) information in response to the execution screen information.

The display unit 151 may include at least one of a liquid crystal display (LCD), a thin film transistor-liquid crystal display (TFT-LCD), an organic light emitting diode (OLED), a flexible display, a 3-dimensional (3D) display, and an e-ink display.

The display unit 151 may be implemented in two or more in number according to a configured aspect of the mobile terminal 100. For instance, a plurality of the display units 151 may be arranged on one surface to be spaced apart from or integrated with each other, or may be arranged on different surfaces.

The display unit 151 may include a touch sensor which senses a touch onto the display unit so as to receive a control command in a touching manner. When a touch is input to the display unit 151, the touch sensor may be configured to sense this touch and the controller 180 may generate a control command corresponding to the touch. The content which is input in the touching manner may be a text or numerical value, or a menu item which can be indicated or designated in various modes.

The touch sensor may be configured in a form of film having a touch pattern. The touch sensor may be a metal wire, which is disposed between the window 151 a and a display (not shown) on a rear surface of the window 151 a or patterned directly on the rear surface of the window 151 a. Or, the touch sensor may be integrally formed with the display. For example, the touch sensor may be disposed on a substrate of the display or within the display.

The display unit 151 may form a touch screen together with the touch sensor. Here, the touch screen may serve as the user input unit 123 (see FIG. 1 A). Therefore, the touch screen may replace at least some of functions of the first manipulation unit 123a.

The first audio output module 152a may be implemented in the form of a receiver for transferring voice sounds to the user's ear or a loud speaker for outputting various alarm sounds or multimedia reproduction sounds.

The window 151 a of the display unit 151 may include a sound hole for emitting sounds generated from the first audio output module 152a. Here, the present disclosure may not be limited to this. It may also be configured such that the sounds are released along an assembly gap between the structural bodies (for example, a gap between the window 151 a and the front case 101). In this case, a hole independently formed to output audio sounds may not be seen or hidden in terms of appearance, thereby further simplifying the appearance of the mobile terminal 100.

The optical output module 154 may output light for indicating an event generation. Examples of the event generated in the mobile terminal 100 may include a message reception, a call signal reception, a missed call, an alarm, a schedule notice, an email reception, information reception through an application, and the like. When a user's event checking is sensed, the controller may control the optical output unit 154 to stop the output of the light.

The first camera 121 a may process video frames such as still or moving images obtained by the image sensor in a video call mode or a capture mode. The processed video frames may be displayed on the display unit 151 or stored in the memory 170.

The first and second manipulation units 123a and 123b are examples of the user input unit 123, which may be manipulated by a user to input a command for controlling the operation of the mobile terminal 100. The first and second manipulation units 123a and 123b may also be commonly referred to as a manipulating portion, and may employ any method if it is a tactile manner allowing the user to perform manipulation with a tactile feeling such as touch, push, scroll or the like.

The drawings are illustrated on the basis that the first manipulation unit 123a is a touch key, but the present disclosure may not be necessarily limited to this. For example, the first manipulation unit 123a may be configured with a mechanical key, or a combination of a touch key and a push key.

The content received by the first and second manipulation units 123a and 123b may be set in various ways. For example, the first manipulation unit 123a may be used by the user to input a command such as menu, home key, cancel, search, or the like, and the second manipulation unit 123b may be used by the user to input a command, such as controlling a volume level being output from the first or second audio output module 152a or 152b, switching into a touch recognition mode of the display unit 151, or the like.

On the other hand, as another example of the user input unit 123, a rear input unit (not shown) may be disposed on the rear surface of the terminal body. The rear input unit may be manipulated by a user to input a command for controlling an operation of the mobile terminal 100. The content input may be set in various ways. For example, the rear input unit may be used by the user to input a command, such as power on/off, start, end, scroll or the like, controlling a volume level being output from the first or second audio output module 152a or 152b, switching into a touch recognition mode of the display unit 151, or the like. The rear input unit may be implemented into a form allowing a touch input, a push input or a combination thereof.

The rear input unit may be disposed to overlap the display unit 151 of the front surface in a thickness direction of the terminal body. As one example, the rear input unit may be disposed on an upper end portion of the rear surface of the terminal body such that a user can easily manipulate it using a forefinger when the user grabs the terminal body with one hand. However, the present disclosure may not be limited to this, and the position of the rear input unit may be changeable.

When the rear input unit is disposed on the rear surface of the terminal body, a new user interface may be implemented using the rear input unit. Also, the aforementioned touch screen or the rear input unit may substitute for at least part of functions of the first manipulation unit 123a located on the front surface of the terminal body. Accordingly, when the first manipulation unit 123a is not disposed on the front surface of the terminal body, the display unit 151 may be implemented to have a larger screen.

On the other hand, the mobile terminal 100 may include a finger scan sensor which scans a user's fingerprint. The controller may use fingerprint information sensed by the finger scan sensor as an authentication means. The finger scan sensor may be installed in the display unit 151 or the user input unit 123.

The microphone 122 may be formed to receive the user's voice, other sounds, and the like. The microphone 122 may be provided at a plurality of places, and configured to receive stereo sounds.

The interface unit 160 may serve as a path allowing the mobile terminal 100 to exchange data with external devices. For example, the interface unit 160 may be at least one of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121 b may be further mounted to the rear surface of the terminal body. The second camera 121 b may have an image capturing direction, which is substantially opposite to the direction of the first camera unit 121 a.

The second camera 121 b may include a plurality of lenses arranged along at least one line. The plurality of lenses may also be arranged in a matrix configuration. The cameras may be referred to as an 'array camera.' When the second camera 121b is implemented as the array camera, images may be captured in various manners using the plurality of lenses and images with better qualities may be obtained.

A flash 124 may be disposed adjacent to the second camera 121 b. When an image of a subject is captured with the camera 121b, the flash 124 may illuminate the subject.

The second audio output module 152b may further be disposed on the terminal body. The second audio output module 152b may implement stereophonic sound functions in conjunction with the first audio output module 152a (refer to FIG. 1 A), and may be also used for implementing a speaker phone mode for call communication.

At least one antenna for wireless communication may be disposed on the terminal body. The antenna may be installed in the terminal body or formed on the case. For example, an antenna which configures a part of the broadcast receiving module 111 (see FIG. 1 A) may be retractable into the terminal body. Alternatively, an antenna may be formed in a form of film to be attached onto an inner surface of the rear cover 103 or a case including a conductive material may serve as an antenna.

A power supply unit 190 for supplying power to the mobile terminal 100 may be disposed on the terminal body. The power supply unit 190 may include a batter 191 which is mounted in the terminal body or detachably coupled to an outside of the terminal body.

The battery 191 may receive power via a power source cable connected to the interface unit 160. Also, the battery 191 may be (re)chargeable in a wireless manner using a wireless charger. The wireless charging may be implemented by magnetic induction or electromagnetic resonance.

On the other hand, the drawing illustrates that the rear cover 103 is coupled to the rear case 102 for shielding the battery 191, so as to prevent separation of the battery 191 and protect the battery 191 from an external impact or foreign materials. When the battery 191 is detachable from the terminal body, the rear case 103 may be detachably coupled to the rear case 102.

An accessory for protecting an appearance or assisting or extending the functions of the mobile terminal 100 may further be provided on the mobile terminal 100. As one example of the accessory, a cover or pouch for covering or accommodating at least one surface of the mobile terminal 100 may be provided. The cover or pouch may cooperate with the display unit 151 to extend the function of the mobile terminal 100. Another example of the accessory may be a touch pen for assisting or extending a touch input onto a touch screen.

As aforementioned with reference to FIG. 1A, a short-range communication technique, such as Bluetooth™, Radio Frequency Identification (RFID), Infrared Data Association (IrDA), Ultra Wideband (UWB), ZigBee, Near Field Communication (NFC), Wireless USB(Wireless Universal Serial Bus) and Magnetic Secure Transmission (MST) may be applicable to the mobile terminal according to the present invention.

An NFC module provided at the mobile terminal supports short-range wireless communication, a non-contactable type between mobile terminals, within about 10 cm. The NFC module may operate in one of a card mode, a reader mode and a P2P mode. The mobile terminal 100 may further include a security module for storing card information, in order to operate the NFC module in a card mode. The security module may be a physical medium such as UICC (Universal Integrated Circuit Card) (e.g., SIM (Subscriber Identification Module) or USIM (Universal SIM)), a secure micro SD and a sticker, or a logical medium (e.g., embedded SE (Secure Element)) embedded in the mobile terminal. SWP (Single Wire Protocol)-based data exchange may be performed between the NFC module and the security module.

In a case where the NFC module operates in a card mode, the mobile terminal may transmit card information on a general IC card to outside. More specifically, if a mobile terminal having therein card information on a payment card (e.g, a credit card or a bus card) is made to approach to a card reader, a short-range mobile payment may be executed. On the other hand, if a mobile terminal which stores card information on an entrance card is made to approach to an entrance card reader, an entrance approval procedure may start. A card such as a credit card, a traffic card and an entrance card may be mounted in the security module in the form of applet, and the security module may store card information on the card mounted therein. Card information of a payment card may be at least one of a card number, a remaining amount and a usage history. Card information of an entrance card may be at least one of a user's name, a user's number (e.g., undergraduate number or staff number) and an entrance history.

In a case where the NFC module operates in a reader mode, the mobile terminal may read data from an external tag. The data received from the external tag by the mobile terminal may be coded into the NFC Data Exchange Format defined by the NFC Forum. The NFC Forum defines four record types. More specifically, the NFC Forum defines four RTDs (Record Type Definitions) such as Smart Poster, Text, URI (Uniform Resource Identifier) and General Control. If the data received from the external tag is a smart poster type, the controller may execute a browser (e.g., Internet browser). If the data received from the external tag is a text type, the controller may execute a text viewer. If the data received from the external tag is a URI type, the controller may execute a browser or originate a call. If the data received from the external tag is a general control type, the controller may execute a proper operation according to control content.

In a case where the NFC module operates in a (Peer-to-Peer) P2P mode, the mobile terminal may execute P2P communication with another mobile terminal. In this case, LLCP (Logical Link Control Protocol) may be applied to the P2P communication. For the P2P communication, connection may be generated between the mobile terminal and said another mobile terminal. The connection may be categorized into a connectionless mode which ends after one packet is switched, and a connection-oriented mode in which packets are switched consecutively. For the P2P communication, data such as an electronic type name card, address information, a digital photo and a URL, a setup parameter for Bluetooth connection, Wi-Fi connection, etc. may be switched. The P2P mode can be effectively utilized in switching data of a small capacity, because an available distance for NFC communication is short.

Hereinafter, preferred embodiments related to a control method which can be implemented in the mobile terminal will be explained in more detail with reference to the attached drawings. It is obvious to those skilled in the art that the present features can be embodied in several forms without departing from the characteristics thereof.

All the following description will be analogically applied to various types of terminals in the same or similar manner. For example, all the following description will be analogically applied to a mobile terminal having a flexible display unit, a flexible mobile terminal, a modular mobile terminal capable of assembling or disassembling at least one configuration (or module, component, unit configuration), a wearable device (for example, a watch-type mobile terminal (or smart watch), a glasses-type mobile terminal (or smart glasses), etc.) in the same or similar manner.

A mobile terminal according to an embodiment of the present disclosure including at least one of the foregoing constituent elements may provide various functions using a short-range communication module (or NFC module).

Hereinafter, the short-range communication module (or NFC module) may be referred to as a short-range communication unit 114. the description of the short-range communication unit 114 and NFC module described in FIG. 1A will be analogically applied to the short-range communication unit 114 in the same or similar manner.

The mobile terminal 100 associated with the present disclosure may perform various function using a short-range communication technology provided in the short-range communication unit 114. For example, the mobile terminal 100 associated with the present disclosure may provide a payment service through short-range communication.

Hereinafter, various services that can be provided using short-range communication according to the present disclosure will be described in more detail with reference to the accompanying drawings.

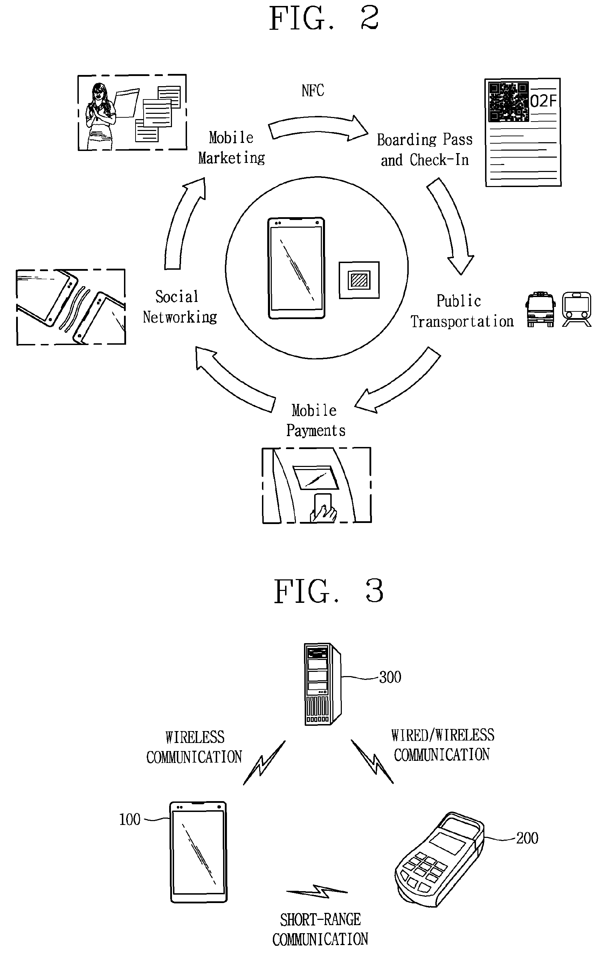

FIG. 2 is a conceptual view for explaining a service associated with near field communication (NFC) applied to the present disclosure.

In recent years, short-range communication between terminals has been widely used because a mobile terminal can be used as a means of payment while a user always carries the mobile terminal. The most representative means of short-range communication methods is near field communication (NFC).

Near field communication (NFC) may be widely used for travel information transfer, transportation, access control lock, and the like for product information or visitors at supermarkets or general stores as well as payment.

When NFC technologies are applied, the mobile terminal 100 may operate a tag-embedded terminal in an active mode as a concept extended from the existing RFID. In this case, the mobile terminal 100 may perform a function of a reader for reading a tag, and a writer for entering information to a tag as well as a function as a tag. Furthermore, the mobile terminal 100 may also perform a P2P function between terminals.

Furthermore, a representative near field communication (NFC) application service of applied to the mobile terminal 100 may be classified as illustrated in FIG. 2. However, it should be clearly understood that a specific application service described in FIG. 2 merely illustrates an example to which the present disclosure is applicable, and can be also provided with another type of service.

First, short-range communication may be applicable to contact/contactless application services between terminals.

For example, contact/contactless application services between terminals may include payment services for execution of payment, account transfer services through online account link, wireless communication access services such as pairing for data exchange between terminals, and the like.

Next, short-range communication may be used for personal information management application services.

For example, personal information management application services may include personal authentication services such as door access, user authentication or the like, and access control services for buildings, vehicles or the like.

Furthermore, short-range communication may be used for information provision and customized advertisement related services.

For example, guide services such as museum, tourist information (voice/text), location guide or the like, medical services such as medical records management, parking services such as parking location check, booking services performing a concert ticking in contact with a poster, advertising and coupon services such as location-based advertisement and coupon offers, product information services such as product information access, authenticity checking, history tracking, manual provisioning and A/S information provisioning, content purchase services such as E-BOOK, music, social network services that immediately transfers information read from a tag to a social network, and the like.

Hereinafter, for the sake of convenience of explanation, a contact/contactless application service between terminals among services using short-range communication, namely, a payment service for execution of payment will be described as an example.

Hereinafter, a payment service associated with the present disclosure will be described in more detail with reference to the accompanying drawings.

FIG. 3 is a conceptual view schematically illustrating a payment system according to an embodiment of the present disclosure.

A payment system for performing a payment service associated with the present disclosure may include a mobile terminal 100, a point of sale (POS) terminal 200, a payment server 300, and the like.

The mobile terminal 100 may perform the role of a means of payment for performing a payment through short-range communication while a user carries it. To this end, the mobile terminal 100 may include the short-range communication unit 114.

Payment method information may be stored in the memory unit 170 of the mobile terminal 100. For an example, the payment method information may include information associated with a card (card information), information associated with the mobile terminal 100 (mobile terminal information), and the like.

The information associated with a card (card information) may include a card number, an expiration date, a CVC number, user information (e.g., name, social security number, telephone number), and the like.

The information associated with the mobile terminal 100 (mobile terminal information) may include user information (e.g., name, social security number, telephone number), and the like.

The mobile terminal 100 may transmit payment method information to the POS terminal 200 through the short-range communication unit 114 to perform a payment.

A magnetic secure transmission (MST) technology as well as the foregoing NFC technology may be applied to the short-range communication unit 114, and the short-range communication unit 114 may transmit the payment method information to the POS terminal 200 in an NFC mode and/or an MST mode.

The magnetic secure transmission (MST) technology may denote a technology in which a magnetic field identical to(or including) a magnetic field generated when a card (for example, a magnetic card, a magnetic credit card) having a magnetic stripe is allowed to access (or contact, swipe) a POS terminal (for example, magnetic payment terminal) provided with a magnetic reader unit is generated from the mobile terminal (for example, wireless communication unit 110, short-range communication unit 114) to transmit payment method information (for example, information associated with the card) to the POS terminal 200 in a wireless manner.

The NFC mode may be used to transmit payment method information to the POS terminal 200 in a wireless manner when the NFC module (or NFC chip) is provided in the POS terminal 200. On the contrary, the MST mode may be used to transmit payment method information to the POS terminal 200 in a wireless manner when a magnetic reader unit exists in the POS terminal 200 even though additional NFC module is not provided therein.

The MST technology (or MST mode) applicable to the present disclosure may be implemented on (applicable to) the wireless communication unit 110 or short-range communication unit 114, and also implemented by an additional MST module (for example, loop antenna) to which the MST technology is applied (for the sake of convenience of explanation, a case where the MST technology is implemented on the short-range communication unit 114 will be described as an example in the present specification.)

The NFC mode and/or the MST mode may be used for (applicable to) the short-range communication unit 114 described in the present specification. In other words, the meaning of "through the short-range communication unit 114" or through short-range communication" may include the meaning of "through the NFC mode", "through the MST mode", and "through at least one of the NFC mode and MST mode."

Specifically, the mobile terminal 100 may control the short-range communication unit 114 to transmit payment method information to the POS terminal 200 when a preset condition is satisfied. For example, the mobile terminal 100 may transmit payment method information when the mobile terminal (body) 100 enters a region capable of short-range communication with the POS terminal 200. For another example, the mobile terminal 100 may transmit the payment method information based on the execution of user authentication in a state that the mobile terminal (body) 100 enters a region capable of short-range communication with the POS terminal 200.

The body may denote a terminal body (or body, housing) constituting the mobile terminal 100. Hereinafter, reference numeral 100 will be disclosed in an interchangeable manner for the mobile terminal and body.

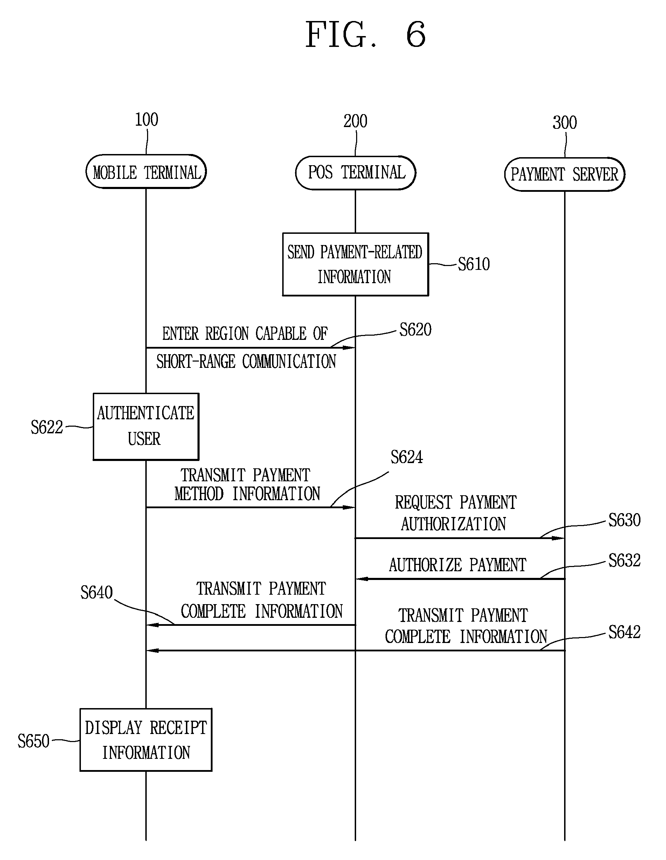

A method of transmitting payment method information through the short-range communication unit 114 will be described later in more detail with reference to FIG. 6.

When the payment method information is information associated with a card (card information), a payment (execution of payment) is carried out with a card corresponding to the information associated with the card, and when the payment method information is information associated with a mobile terminal (mobile terminal information), a payment (execution of payment) is carried out with the mobile terminal 100.

The POS terminal 200 is a terminal formed to be provided at a sales/accounting base or to be carried so as to perform a payment function or payment cancel function.

The POS terminal 200 may be formed in various types. For an example, the POS terminal 200 may include a PC type provided with a card reader, a portable terminal type, and the like.

The POS terminal 200 described in the present disclosure should be understood with the concept of including all devices capable of acquiring payment method information to perform a payment. For example, a first device of receiving payment method information through short-range communication and a second device of transmitting and receiving payment method information to and from the device to request a payment to the payment server 300 are separately divided, it may be a first device or second device, and otherwise understood as a device including both the first and the second device.

The POS terminal 200 associated with the present disclosure may perform a function of transmitting and receiving information through short-range communication and a function of requesting a payment to the payment server 300.

Requesting a payment may include the meaning of transmitting the received payment method information, payment product information, an amount of payment, and the like to the payment server 300.

The POS terminal 200 may include a communication unit to perform communication with the mobile terminal 100 and payment server 300. Specifically, the description of the wireless communication unit 110 described in FIG. 1 A may be analogically applied to such a communication unit in the same or similar manner.

For an example, the POS terminal associated with the present disclosure may perform short-range communication with the mobile terminal 100, and perform wired/wireless communication with the payment server 300 through the communication unit.

The payment server 300 may perform a function of performing a payment. The payment server 300 may include various servers associated with a payment. For example, the payment server 300 may include a server provided in a card company, a communication provider providing a mobile communication network, and the like.

When a payment request is received from the POS terminal 200 or mobile terminal 100, the payment server 300 may perform a payment based on the received payment request. Here, performing a payment may be understood to perform the operation of payment authorization for authorizing the received payment request.

Specifically, the payment server 300 may perform payment authorization based on the received payment request, and transmit payment authorization information (or payment complete information) for notifying that a payment has been authorized (or completed) to a terminal (for example, mobile terminal 100 or POS terminal 200) that has transmitted the payment request.

The payment server 300 may include a communication unit capable of receiving a payment request and transmitting payment complete information (or notification information for notifying that a payment has been failed) to the mobile terminal 100 or POS terminal 200. Specifically, the communication unit may include a short-range communication unit (or short-range communication module), a wireless communication unit, a wired communication unit, and the like. The description of the wireless communication unit 110 described in FIG. 1A will be analogically applied to the communication unit in the same or similar manner.

For example, the payment server 300 and mobile terminal 100 may perform wireless communication through a mobile communication network. Furthermore, the payment server 300 and mobile terminal 100 may perform wired or wireless communication.

The foregoing payment system associated with the present disclosure may add its required additional configurations or delete some configurations if necessary.

Hereinafter, a method of allowing the mobile terminal 100 to perform a payment through short-range communication will be described in brief with reference to the payment system described in FIG. 3.

Payment method information may be stored in the memory unit 170 of the mobile terminal 100. For an example, the payment method information may include a type of payment method (for example, a card, a type of card), information used for a payment (for example, a card number, an expiration date, a CVC number, etc.), user information (e.g., name, telephone number, social security number), and the like. The mobile terminal 100 associated with the present disclosure may store payment method information in the memory unit 170 in various ways based on a user request.

A payment-related application may be prestored (installed) in the memory unit 170. The controller 180 may execute a payment-related application based on a user request. For example, the controller 180 may execute a payment-related application based on an icon of the payment-related application being selected

### (touched)

When a payment-related application is executed, an execution screen of the payment-related application may be displayed on the touch screen 151. Various screen information may be displayed on the execution screen.

For an example, the execution screen may include a graphic object for entering payment method information. When the graphic object is selected, the controller 180 may display screen information for entering payment method information on the touch screen 151, and store payment method information that has been received through the screen information in the memory unit 170. The payment method information may include a type of payment method (for example, a card, a type of card), information used for a payment (for example, a card number, an expiration date, a CVC number, etc.), user information (e.g., name, telephone number, social security number), and the like.

For another example, when the graphic object is selected, the controller 180 may switch the camera 121 from an inactive state to an active state. Here, the inactive state may denote a non-operating state (or OFF state), and the active state may denote an operating state (or ON state).

The controller 180 may acquire payment method information using an image received through the camera 121. For example, when the image of a payment method (for example, a card) is received through the camera 121, the controller 180 may acquire (extract) payment method information on the payment method through optical character recognition (OCR) technologies.

However, it should be noted that a method of storing payment method information may not be necessarily limited to the foregoing description.

The controller 180 may transmit the foregoing payment method information to the POS terminal 200 through the short-range communication unit 114 to perform a payment. The payment method information may be transmitted to the short-range communication unit 114 in various ways, and the related description thereof will be described later in detail with reference to FIG. 6.

The POS terminal 200 that has received payment method information through short-range communication may request a payment to the payment server 300 through the communication unit. Specifically, the POS terminal 200 may transmit at least one of payment method information, an amount of payment, payment target item (product) to the payment server 300.

The payment server 300 may determine whether or not a payment request received from the POS terminal 200 is authorized. For example, the payment server 300 may determine whether or not a payment using a payment method corresponding to payment method information received from the POS terminal 200 is restricted, whether or not an amount of payment received from the POS terminal 200 exceeds a preset amount limit, and the like.

Then, the payment server 300 may transmit payment authorization information (payment complete information) to at least one of the POS terminal 200 and mobile terminal 100. Specifically, when a payment using a payment method corresponding to payment method information received from the POS terminal 200 is not restricted, and the amount of payment does not exceed a preset payment limit, the payment server 300 may transmit payment complete information (payment authorization information) for notifying that the payment has been completed to at least one of the POS terminal 200 and mobile terminal 100.

If a payment using a payment method corresponding to payment method information received from the POS terminal is restricted, and the amount of payment exceeds a preset payment limit, the payment server 300 may transmit notification information (payment authorization information) for notifying that the payment has not been completed (or notification information for notifying that the payment has not been completed (failed)) to at least one of the POS terminal 200 and mobile terminal 100.

When payment complete information or notification information for notifying that the payment has not been completed is transmitted from the payment server 300 to the POS terminal 200, the POS terminal 200 may transmit the received information to the mobile terminal 100 through short-range communication.

When the payment has been authorized from the payment server 300, the mobile terminal 100 may receive payment complete information from at least one of the payment server 300 and POS terminal 200. The payment complete information may include information associated with a payment target product (item) (for example, product name, product quantity), payment amount information and payment method information that has performed a payment (or an image corresponding thereto).

In this case, the mobile terminal 100 may display at least one of receipt information corresponding to the payment complete information and screen information (for example, short message service (SMS)/multi-media message service (MMS) screen information) including the payment complete information on the touch screen 151. The receipt information may include information associated with a payment target product (for example, product name, product quantity), payment amount information and payment method information that has performed a payment (or an image corresponding thereto).

The receipt information may be generated from the POS terminal 200 and transmitted to the mobile terminal 100 or generated by the controller 180 based on payment complete information received from the POS terminal 200.

The payment complete information, the receipt information and the like may be stored in the memory unit 170.

The foregoing description will be analogically applied to a method of cancelling a payment in the same or similar manner.

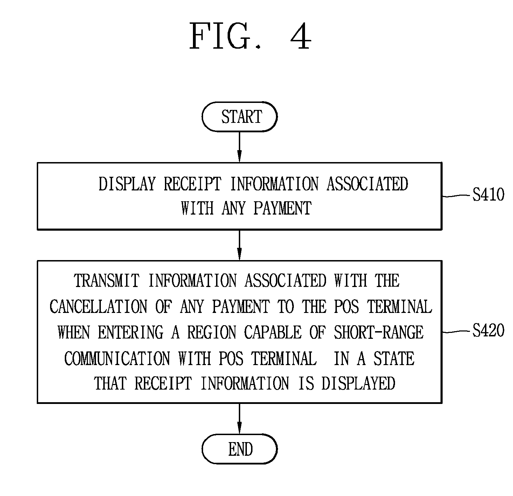

The controller 180 may transmit information associated with the cancellation of a payment to be cancelled to the POS terminal 200 through the short-range communication unit 114 to cancel the payment. The payment method information may be transmitted to the short-range communication unit 114 in various ways, and the description thereof will be described later in more detail with reference to FIG. 4.

However, the present disclosure may not be necessarily limited to this, and the controller 180 may transmit information associated with the cancellation of a payment to be cancelled to the payment server 300 through the wireless communication unit 110.

The information associated with the cancellation of a payment may include paid payment amount information, paid product (item) information, payment method information used for a payment, payment method information different from the payment method information, and the like.

The POS terminal 200 that has received information associated with the cancellation of a payment through the short-range communication may request payment cancellation to the payment server 300. Specifically, the POS terminal 200 may transmit information (paid payment amount information, payment product (item) information, payment method information used for a payment, payment method information different from the payment method information, etc.) associated with the cancellation of a payment to the payment server 300.

Upon receiving information associated with the cancellation of a payment received from at least one of the mobile terminal 100 and POS terminal 200, the payment server 300 may cancel the relevant payment.

However, the present disclosure may not be necessarily limited to this, the payment server 300 may request a cancellation confirmation request to at least one of the mobile terminal 100 and POS terminal 200 upon receiving information associated with the cancellation of a payment. It should be understood by those skilled in the art that the cancellation confirmation request transmits information for checking whether or not to cancel the payment. Upon receiving a confirmation response to the cancellation confirmation request from at least one of the light guide plate 10 and POS terminal 200, the payment server 300 may cancel the relevant payment.

Then, the payment server 300 may transmit information associated with cancellation complete for notifying that a payment has been cancelled to at least one of the POS terminal 200 and mobile terminal 100. The information associated with cancellation complete may be referred to as payment cancellation information, payment cancellation authorization information, payment cancellation complete information, or the like.

When payment complete information is transmitted from the payment server 300 to the POS terminal 200, the POS terminal 200 may transmit the received information associated with cancellation complete to the mobile terminal 100 through short-range communication.

When payment cancellation is authorized from the payment server 300 (or payment is cancelled), the mobile terminal 100 may receive information associated with cancellation complete from at least one of the payment server 300 and POS terminal 200 through the short-range communication unit 114 or wireless communication unit 110. In this case, the mobile terminal 100 may display at least one of cancellation receipt information corresponding to the information associated with cancellation complete and screen information (for example, short message service (SMS)/multi-media message service (MMS) screen information) including the information associated with cancellation complete on the touch screen 151.

The information associated with cancellation complete, the cancellation receipt information, and the like may be stored in the memory unit 170.

The cancellation receipt information may be generated from the POS terminal 200 and transmitted to the mobile terminal 100 or generated by the controller 180 based on information associated with cancellation complete received from the POS terminal 200.

It should be understood by those skilled in the art that the above-described operation/function description of the mobile terminal 100 is carried out by the controller 180 of the mobile terminal 100.

On the other hand, the present disclosure may provide a UI/UX capable of cancelling a payment through short-range communication in an optimal method. Hereinafter, a UI/UX capable of cancelling a payment through short-range communication in an optimal method and a control method thereof will be described in more detail with reference to the accompanying drawings.

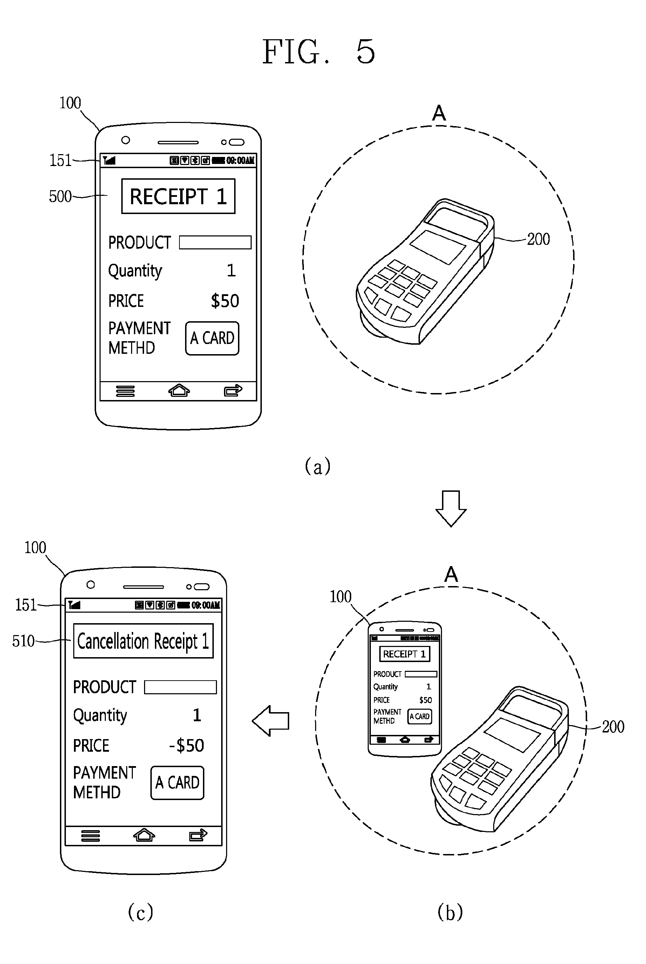

FIG. 4 is a flow chart representatively illustrating a control method of the present disclosure, and FIG. 5 is a conceptual view for explaining the control method illustrated in FIG. 4.

First, according to the present disclosure, the process of displaying receipt information associated with any payment on the touch screen 151 is carried out (S410). Specifically, the controller 180 of the mobile terminal 100 may display receipt information associated with any payment on the touch screen 151 based on a user request.

The user request may include various types of user control commands.

For example, the controller 180 may display receipt information associated with the any payment on the touch screen 151 through a predetermined flow subsequent to executing a payment-related application. The receipt information may be displayed based on a graphic object linked with a function of displaying receipt information being touched.

For another example, the controller 180 may display receipt information associated with the any payment on the touch screen 151 based on a preset type of touch applied to the touch screen 151. The receipt information may be displayed when the preset type of touch is applied in a state that a payment-related application is executed or applied while the touch screen 151 is in an inactive state or applied in a state that another screen information other than the execution screen of the payment-related application is displayed on the touch screen 151. In other words, when the preset type of touch is applied to the touch screen 151 without additional restriction, the controller 180 may control the touch screen to display the receipt information on the touch screen 151.

For still another example, the controller 180 may display receipt information associated with the any payment on the touch screen 151 based on the body 100 entering a region capable of short-range communication with the POS terminal 200.

For yet still another example, the controller 180 may display receipt information associated with the any payment on the touch screen 151 based on whether or not a preset condition is satisfied as well as the body 100 entering a region capable of short-range communication with the POS terminal 200.

Furthermore, the present disclosure may display screen information associated with a payment as well as receipt information through the foregoing method. For example, screen information associated with a payment may include an image corresponding to payment method information (or an image associated with a payment method) (for example, card image), an execution screen of a payment-related application, screen information for performing user authentication, cancellation receipt information, and the like.

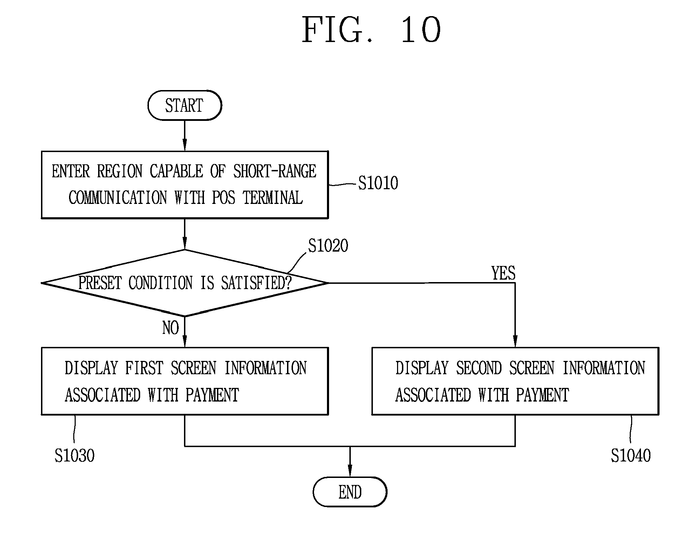

A more specific method for displaying the receipt information on the touch screen 151 will be described later with reference to FIGS. 10 through 13C.

The any payment may be a payment for any one of at least one payment that has performed a payment through short-range communication using the relevant mobile terminal 100. Otherwise, the any payment may be at least one of a plurality of payments that has performed a payment through short-range communication. The any payment may denote one payment or denote a plurality of payments.

Receipt information associated with any payment may be information indicating that the any payment has been completed.

In general, a receipt may denote a certificate indicating a fact that either money or product has been received. A receipt is typically understood as a paper on which a fact that money or product has been received is printed

Receipt information may perform the same role as that of an off-line receipt. However, receipt information may be screen information formed to display a fact that money or product has been received on the mobile terminal (or electronic device).

The receipt information may be payment complete information itself described in FIG. 3 or screen information including payment complete information.

For example, as illustrated in FIG. 5A, information associated with a payment target product (item) (for example, product name, product quantity), payment amount information and payment method information that has performed a payment (or an image corresponding thereto). However, receipt information described in the present disclosure may be displayed in various forms other than being limited to a form illustrated in FIG. 5A.

Then, according to the present disclosure, when the body 100 (mobile terminal 100) enters a region capable of short-range communication with the POS terminal 200 in a state that receipt information associated with any payment is displayed, the process of transmitting information associated with the cancellation of the any payment to the POS terminal through short-range communication is carried out (S420).

Specifically, the mobile terminal 100 associated with the present disclosure may include the short-range communication unit 114 performing short-range communication. When the body mobile terminal 100 enters a region capable of short-range communication with the POS terminal 200 in a state that receipt information associated with any payment (or receipt information corresponding to any payment) is displayed on the touch screen 151, the controller 180 may transmit information associated with the any payment for cancelling the any payment to the POS terminal 200 through the short-range communication unit 114.

For example, as illustrated in FIG. 5A, receipt information 500 associated with any payment may be displayed on the touch screen 151. In this state, as illustrated in FIG. 5B, when the body 100 entering a region (A) capable of short-range communication with the POS terminal 200 is sensed, the controller 180 may transmit information associated with the cancellation of the any payment to the POS terminal 200 through the touch screen 151.

The region (A) capable of short-range communication denotes a region (a space, a virtual region, a virtual space, a relative distance) capable of short-range communication between the short-range communication unit 114 provided in the mobile terminal 100 and POS terminal 200 and the communication unit of the POS terminal. Furthermore, the body 100 (mobile terminal 100) entering a region capable of short-range communication with the POS terminal 200 may be referred to as the body 100 moving (approaching) in proximity to the POS terminal 200, the POS terminal 200 moving in proximity to the body 100, the body 100 and POS terminal 200 being brought into contact with each other, the body 100 and POS terminal 200 being tagged with each other or at least one of the body 100 and POS terminal 200 moving to allow a relative distance between the body 100 and POS terminal 200 to be within a distance capable of short-range communication, and may include the foregoing operation/meaning.

The size of the region (A) capable of short-range communication may vary according to a specification of the short-range communication unit 114 and the communication unit of the POS terminal performing short-range communication, a type of short-range communication technology, and an environment surrounding the mobile terminal 100 and POS terminal 200.

For example, the size of the region capable of short-range communication may be around 10 cm based on the mobile terminal 100 or POS terminal as previously described in FIG. 1 A. However, it should be understood by those skilled in the art that that the above distance may vary according to a specification of the short-range communication unit 114 and the communication unit of the POS terminal performing short-range communication, a type of short-range communication technology, and an environment thereof.

For an example, when the body 100 of the mobile terminal moved to allow a distance between the body 100 of the mobile terminal and the POS terminal 200 to be within 10 cm, the controller 180 may transmit information associated with the cancellation of any payment to the POS terminal 200 through the color filter 141 based on receipt information associated with the any payment displayed on the touch screen 151.

In other words, when the body 100 enters a region (A) capable of short-range communication with the POS terminal 200 in a state that receipt information 500 associated with any payment, the controller 180 may control the short-range communication unit 114 to transmit information associated with the cancellation of the any payment to the POS terminal 200.

The mobile terminal associated with the present disclosure may determine (decide, sense) that the body 100 has entered a region (A) capable of short-range communication with the POS terminal 200 in various ways.

For example, the POS terminal 200 may send a specific signal in a periodic manner, at preset time intervals, based on a user request or all the time. The specific signal may be a signal used to determine whether or not a electronic device (mobile terminal), a card or the like desired to perform short-range communication enters a region (A) capable of short-range communication with the relevant POS terminal 200.

The controller 180 may determine that the body 100 has entered a region capable of short-range communication with the POS terminal 200 based on a specific signal sent from the POS terminal 200 being received through the short-range communication unit 114.

For another example, when receipt information is displayed on the touch screen, the controller 180 may control the short-range communication unit 114 to send one signal in a periodic manner, at preset time intervals, based on a user request or all the time. The one signal may be a signal used to sense the POS terminal 200 or information associated with the cancellation of any payment.

When the body 100 moves (approaches) in proximity to the POS terminal 200 (enters a region (A) capable of short-range communication) in a state that the one signal is sent as receipt information is displayed on the touch screen 151, the POS terminal 200 may receive the one signal through short-range communication. In this case, the POS terminal 200 may transmit a signal for notifying that the body 100 of the mobile terminal has entered a region (A) capable of short-range communication to the mobile terminal through short-range communication.

The controller 180 of the mobile terminal may determine that the body 100 has entered a region (A) capable of short-range communication with the POS terminal 200 based on the signal received from the POS terminal 200.

However, the present disclosure may not be necessarily limited to the foregoing description, and the mobile terminal of the present disclosure may determine that the body has entered a region capable of short-range communication in various ways.

For example, when the POS terminal 200 is a POS terminal used to perform any payment, the location information of the POS terminal 200 may be stored in the memory unit 170. The controller 180 may determine the location of the body 100 using the location information module 115.

When receipt information associated with the any payment is displayed on the touch screen 151, the controller 180 may determine that the body 100 has entered a region capable of short-range communication with the POS terminal 200 based on the location information of the POS terminal 200 and the location of the body 100.

When information associated with the cancellation of the any payment is received through the communication unit of the POS terminal, the controller of the POS terminal 200 may request the cancellation of the any payment to the payment server 300 based on the information associated with the cancellation of the any payment.

The payment server 300 may cancel the any payment based on the request, and transmit information (payment cancellation information, payment cancellation authorization information, payment cancellation complete information) associated with cancellation complete for notifying that the any payment has been cancelled to at least one of the POS terminal 200 and mobile terminal 100.

The information associated with cancellation complete is received at the POS terminal 200, the POS terminal 200 may transmit the information associated with cancellation complete to the mobile terminal 100 through short-range communication.

The information associated with cancellation complete may include information associated with a target product that has cancelled a payment (for example, product name, product quantity), payment cancellation amount information and payment method information that has performed a payment (or payment cancellation) (or an image corresponding thereto).

Cancellation receipt information 510 indicating that the any payment has been cancelled may be displayed on the touch screen 151 of the mobile terminal 100 that has received the information associated with cancellation complete from at least one of the POS terminal 200 and payment server 300 as illustrated in FIG. 5C.

Specifically, when information associated with the cancellation of any payment is transmitted to the POS terminal 200 and then information associated with cancellation complete is received from the POS terminal 200, the controller 180 may control the touch screen 151 to display cancellation receipt information 510 associated with the any payment on the touch screen 151.

The cancellation receipt information 510 may be modified to cancellation receipt information associated with any payment, cancellation receipt information indicating that any payment has been cancelled, cancellation receipt information corresponding to information associated with cancellation complete, or the like.

Information associated with a target product that has cancelled a payment (for example, product name, product quantity), payment cancellation amount information and payment method information that has performed a payment (or payment cancellation) (or an image corresponding thereto) may be displayed on the cancellation receipt information 510.

The cancellation receipt information 510 may be the information itself associated with cancellation complete or screen information including the information associated with cancellation complete.

It should be noted that the cancellation receipt information 510 of the present disclosure may be displayed in various forms other than being limited to a form illustrated in FIG. 5C.

The receipt information 500 and cancellation receipt information 510 may be displayed at the same time on the touch screen 151. Specifically, when the body enters a region (A) capable of short-range communication with the POS terminal 200 in a state that the receipt information 500 associated with any payment is displayed, the controller 180 may transmit information associated with the cancellation of the any payment to the POS terminal 200. Then, when information associated with cancellation complete is received from at least one of the POS terminal 200 and payment server 300, the controller 180 may control the touch screen 151 to display the receipt information 500 and the cancellation receipt information 510 associated with the any payment at the same time.

The controller 180 may group the receipt information 500 associated with the any payment and the cancellation receipt information 510 associated with the any payment into one group. Furthermore, at least part of the receipt information 500 and cancellation receipt information 510 may be displayed in an overlapping manner or the receipt information 500 and cancellation receipt information 510 may be displayed in separate regions, respectively, in a non-overlapping manner. When the receipt information 500 and cancellation receipt information 510 are displayed in an overlapping manner, at least part of the receipt information 500 and cancellation receipt information 510 may not be displayed.

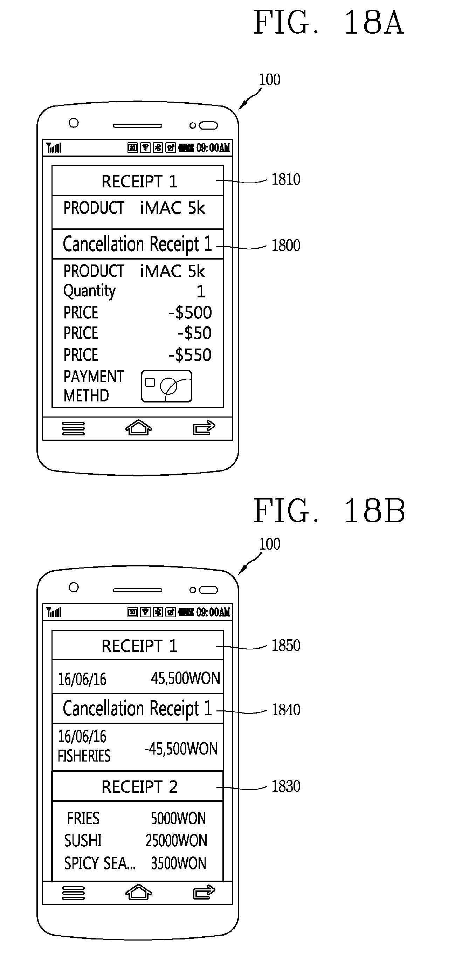

The description related thereto will be described later in more detail with reference to FIGS. 18A and 18B.

Through the foregoing configuration, the present disclosure may cancel a payment corresponding to the receipt information based on the mobile terminal entering a region capable of short-range communication with the POS terminal in a state that receipt information is displayed. Accordingly, the present disclosure may provide a UI/UX capable of allowing a user to cancel a payment in an optimal method.

When a payment corresponding to the receipt information is cancelled, the present disclosure may display cancellation receipt information along with the receipt information, thereby providing a user interface for allowing a user to more easily know that the relevant receipt information has been cancelled.

Hereinafter, a payment method and a payment cancellation method differentiated from the related art will be described in more detail with reference to the accompanying drawings.

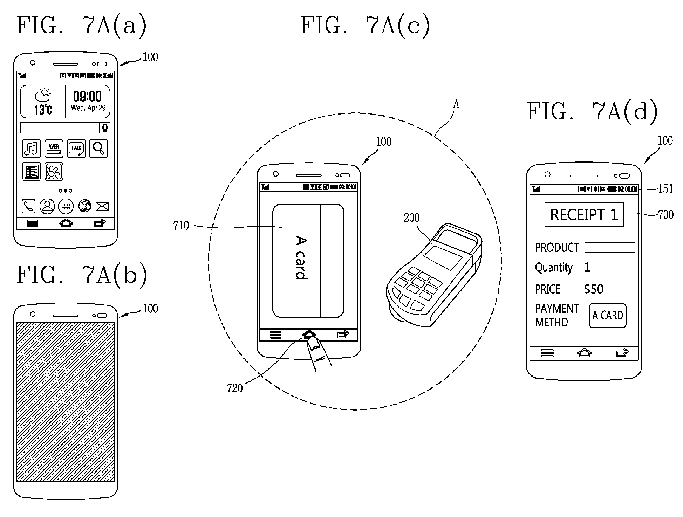

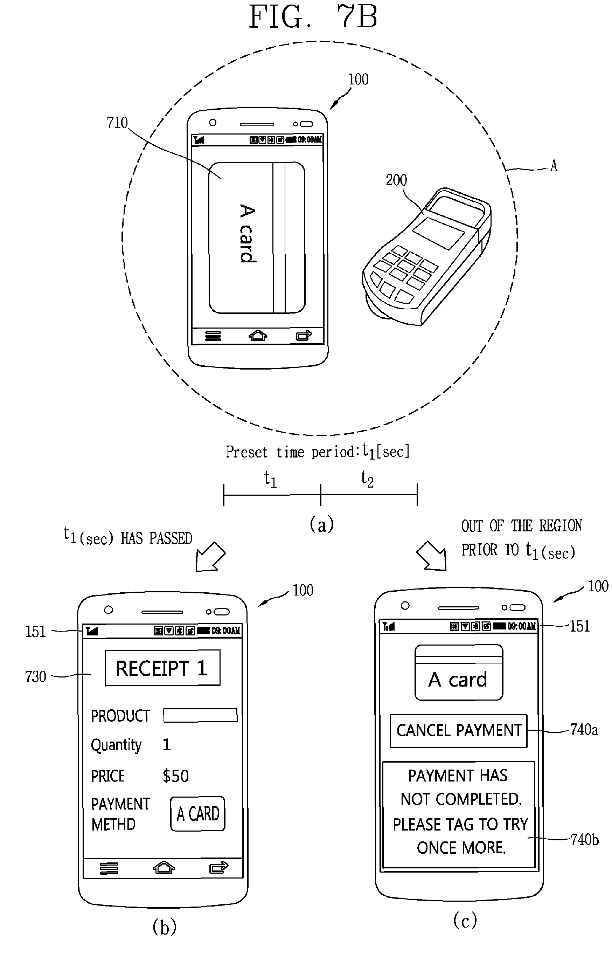

First, a payment method according to an embodiment of the present disclosure will be described with reference to FIGS. 6, 7A and 7B.

FIG. 6 is a flow chart for explaining a method of performing a payment according to an embodiment of the present disclosure, and FIGS. 7A and 7B are conceptual views for explaining the method illustrated in FIG. 6.

As described above, according to the present disclosure, a payment may be carried out using short-range communication. A payment system according to an embodiment of the present disclosure capable of performing a payment using short-range communication may include a mobile terminal 100, 1 POS terminal 200 and a payment server 300 as illustrated in FIG. 6.

Referring to FIG. 6, first, the process of allowing the POS terminal 200 of the present disclosure to send payment-related information based on a user request is carried out (S610). The payment-related information may include payment product information (product name, product quantity), payment amount information, and the like desired to perform a payment. Meanwhile, the present disclosure may not be necessarily limited to this, and the POS terminal 200 may send a specific signal used to determine whether or not the mobile terminal 100 desired to perform short-range communication enters a region (A) capable of short-range communication with the relevant POS terminal 200.

The information or signal described in the step S610 may be sent in a periodic manner, at preset time intervals, based on a user request or all the time.

In this state, according to the present disclosure, the process of allowing the mobile terminal 100 (or body 100) to enter a region (A) capable of short-range communication with the POS terminal 200 is carried out (S620).

The mobile terminal 100 and POS terminal 200 may determine whether or not the mobile terminal 100 has entered a region (A) capable of short-range communication with the POS terminal 200, and the description thereof will be substituted by the description illustrated in FIG. 5.

When the mobile terminal 100 enters a region (A) capable of short-range communication with the POS terminal 200, the process of performing user authentication is carried out according to the present disclosure (S622).

User authentication information authentication using user's biometric information. For example, the biometric information may include fingerprint information, iris information, voice information, and the like. Furthermore, the controller 180 may perform user authentication based on a number corresponding to a preset number (password) or a touch pattern corresponding to a preset pattern being entered.

When user authentication is successful, according to the present disclosure, the process of allowing the mobile terminal 100 to transmit payment method information to the POS terminal 200 is carried out. Specifically, when the user authentication is successful, the controller 180 may control the short-range communication unit 114 to transmit any one of payment method information stored in the memory unit to the POS terminal 200 through short-range communication.

The payment method information may include a type of payment method (for example, a card, a type of card), information used for a payment (for example, a card number, an expiration date, a CVC number, etc.), user information (e.g., name, telephone number, social security number), and the like.

The steps S620 through S624 as described above may not be necessarily limited to a time-series manner.

For example, the step S622 (user authentication process) may be carried out prior to the step S620. In other words, when the body 100 enters a region (A) capable of short-range communication with the POS terminal 200 subsequent to the success of user authentication, the controller 180 may transmit payment method information to the POS terminal 200 through short-range communication.

Then, according to the present disclosure, the process of allowing the POS terminal 200 that has received payment method information to request a payment to the payment server 300 is carried out (S630).

Said requesting a payment may include the meaning of transmitting payment method information received from the mobile terminal 100, payment product information selected from the POS terminal, an amount of payment, and the like to the payment server 300.

The payment server 300 performs payment authorization based on the payment request (S632). Here, performing payment authorization may include the steps of transmitting information for notifying that a payment has been authorized or payment complete information to the POS terminal 200.

The POS terminal 200 that has received information for notifying that a payment has been authorized or payment complete information may transmit payment complete information to the mobile terminal 100 through short-range communication (S640). Meanwhile, the payment complete information may be directly transmitted to the mobile terminal 100 through wireless communication from the payment server 300 (S642).

The mobile terminal 100 that has completed payment complete information may display receipt information on the touch screen 151. When a payment completed subject is any payment, receipt information associated with the any payment may be displayed on the touch screen 151 (S650).

The foregoing description will be clearly understood through FIG. 7A.

The touch screen 151 associated with the present disclosure may be in an active state as illustrated in FIG. 7A(a) or in an inactive state as illustrated in FIG. 7A(b). When the touch screen 151 is in an active state as illustrated in FIG. 7A(a), any screen information may be displayed on the touch screen 151. The any screen information denotes all types of screen information (or execution screens) that can be displayed on the mobile terminal, and does not depend on the type of screen information.

When the body 100 of the mobile terminal 100 enters a region (A) capable of short-range communication with the POS terminal 200 by a user (by an external force), the controller 180 may display screen information for selecting payment method information on the touch screen 151 as illustrated in FIG. 7A(c). If the touch screen 151 is in an inactive state prior to entering the region (A), the controller 180 may switch the touch screen 151 from an inactive state to an active state, and display screen information for selecting the payment method information on the touch screen 151.

The screen information for selecting the payment method information may include an image 710 corresponding to payment method information and a graphic object 720 formed to perform user authentication.

Though not shown in the drawing, the image 710 corresponding to the payment method information may be changed to an image corresponding to another payment method information based on a preset type of touch being applied thereto. For example, when a drag touch is applied to the image 710 corresponding to the payment method information, the controller 180 may change the image guide information 710 to an image corresponding to the another payment method information.

The controller 180 may perform user authentication based on a user request in a state that the body 100 enters the region (A) and screen information for selecting payment method information is displayed on the touch screen 151. For example, when the user authentication is fingerprint recognition, the controller 180 may extract finger's fingerprint information that has applied a touch to the graphic object 720 formed to perform the user authentication, and perform fingerprint recognition based on the extracted fingerprint information. The fingerprint recognition may be carried out through the fingerprint recognition module illustrated in FIG. 1 A.

When the user authentication is successful, the controller 180 may control the short-range communication unit 114 to transmit image-linked payment method information corresponding to payment method information displayed on the touch screen to the POS terminal 200 through short-range communication.

Then, when payment complete information is received from at least one of the POS terminal 200 and payment server 300, the controller 180 may display receipt information 730 associated with the relevant payment on the touch screen 151 based on the payment complete information.

On the other hand, the present disclosure may transmit payment method information to the POS terminal 200 through short-range communication based on the passage of a preset period of time subsequent to the mobile terminal 100 (body 100) entering a region (A) capable of short-range communication with the POS terminal 200 or subsequent to the success of user authentication.

The preset period of time may be set by a user or vary based on a user request. Furthermore, the preset period of time may perform the role of checking user's intention desired to perform a payment.

For example, t_1 illustrated in FIG. 7B(a) is the preset period of time, and t_2 denotes a time at which a payment is completed subsequent to transmitting payment method information. t_2 may be determined and varied based on at least one of a short-range communication speed between the mobile terminal 100 and POS terminal 200, an operation processing speed of the POS terminal 200, a communication speed between the POS terminal 200 and payment server 300, an operation processing speed of the payment server 300, and a wireless communication speed between the mobile terminal 100 and payment server 300.

In a state that an image corresponding to payment method information is displayed to perform a payment as illustrated in FIG. 7B(a), the controller 180 may transmit payment method information corresponding to the image to the POS terminal 200 through the short-range communication unit 114 based on the passage of a preset period of time (t_1) subsequent to the body 100 entering a region (A) capable of short-range communication with the POS terminal 200 (more specifically, subsequent to sensing the POS terminal 200 capable of short-range communication).

Here, when the body 100 is out of the region (A) subsequent to the passage of the preset period of time (t_1), receipt information 730 associated with the relevant payment may be displayed based on payment complete information received from at least one of the POS terminal 200 and payment server 300 on the touch screen 151 as illustrated in FIG. 7B(b).

When the body 100 is out of the region (A) prior to the passage of the preset period of time (t_1), the controller 180 may not transmit payment method information to the POS terminal 200. In this case, notification information 740b for notifying that the payment has not been carried out and an icon 740a linked with a function of returning to previous screen information may be displayed on the touch screen 151 as illustrated in FIG. 7B(c).

On the other hand, when the body 100 is out of the region (A) prior to the passage of a period of time (t_2), the controller 180 may receive the payment complete information from the payment server 300, and the controller 180 may receive payment complete information from the POS terminal 200 when the body 100 exists in the region (A) until the passage of the period of time (t_2). When the body 100 exists in the region (A) until the passage of the period of time (t_2), the controller 180 may also receive payment complete information from the POS terminal 200 and payment server 300.

Through the foregoing configuration, the present disclosure may provide a payment method capable of checking user's intention desired to perform a payment.

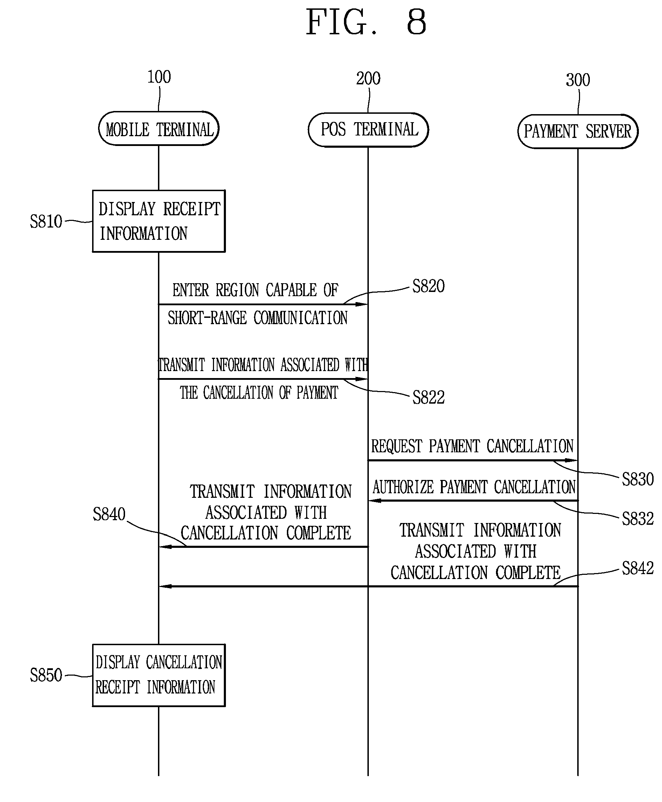

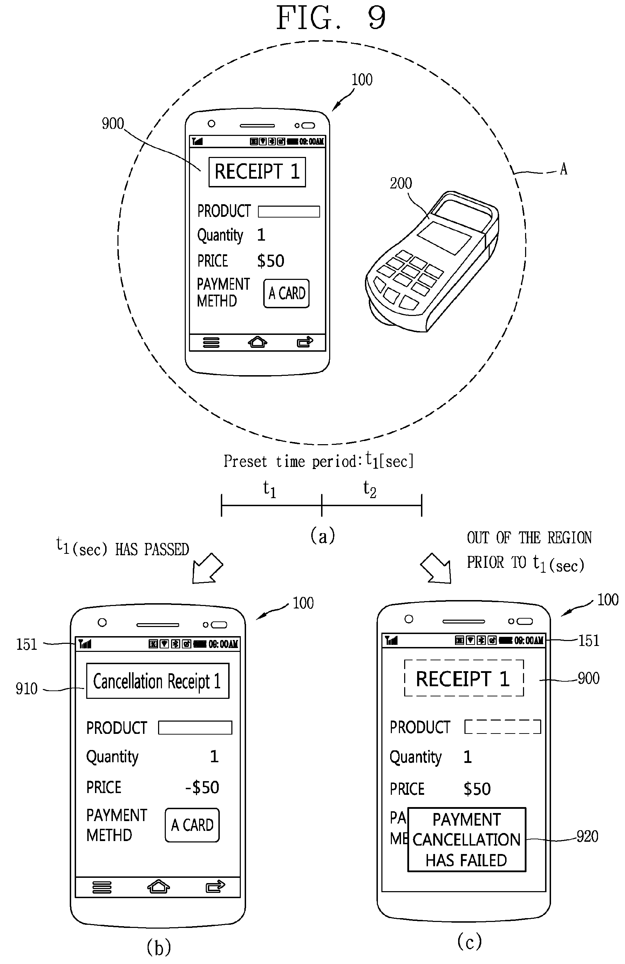

Hereinafter, a payment cancellation method according to an embodiment of the present disclosure will be described with reference to FIGS. 8 and 9.

FIG. 8 is a flow chart for explaining a method of cancelling a payment according to an embodiment of the present disclosure, and FIG. 9 is a conceptual view for explaining the method illustrated in FIG. 8.

As described above, the present disclosure may perform a payment using short-range communication. A payment system according to an embodiment of the present disclosure capable of performing a payment using short-range communication may include a mobile terminal 100, a POS terminal 200 and a payment server 300. The POS terminal 200 may be a POS terminal 200 that may have performed any payment with the mobile terminal 100, but may not be necessarily limited to this.

Referring to FIG. 8, first, according to the present disclosure, the process of displaying receipt information associated with any payment on the touch screen is carried out (S810).

The receipt information as screen information indicating that the any payment has been completed may include information associated with payment target item (for example, product name, product quantity), payment amount information and payment method information that has performed a payment (or an image corresponding thereto).

Then, according to the present disclosure, the process of allowing the mobile terminal 100 (body 100) to enter a region (A) capable of short-range communication with the POS terminal 200 is carried out (S820).

The POS terminal 200 may be a POS terminal 200 that has performed any payment corresponding to receipt information displayed on the touch screen 151 as well as a POS terminal 200 that has performed a payment with the mobile terminal 100. However, the present disclosure may not be necessarily limited to this.

The mobile terminal associated with the present disclosure may determine (decide, sense) that the body 100 has entered a region (A) capable of short-range communication with the POS terminal 200 in various ways.

For example, the POS terminal 200 may send a specific signal in a periodic manner, at preset time intervals, based on a user request or all the time. The specific signal may be a signal used to determine whether or not a electronic device (mobile terminal), a card or the like desired to perform short-range communication enters a region (A) capable of short-range communication with the relevant POS terminal 200.

For another example, when receipt information is displayed on the touch screen, the controller 180 may control the short-range communication unit 114 to send one signal in a periodic manner, at preset time intervals, based on a user request or all the time. The one signal may be a signal used to sense the POS terminal 200 or information associated with the cancellation of any payment.

When the body 100 moves (approaches) in proximity to the POS terminal 200 (enters a region (A) capable of short-range communication) in a state that the one signal is sent as receipt information is displayed on the touch screen 151, the POS terminal 200 may receive the one signal through short-range communication. In this case, the POS terminal 200 may transmit a signal for notifying that the body 100 of the mobile terminal has entered a region (A) capable of short-range communication to the mobile terminal through short-range communication.

The controller 180 of the mobile terminal may determine that the body 100 has entered a region (A) capable of short-range communication with the POS terminal 200 based on the signal received from the POS terminal 200.

Then, the present disclosure may control the short-range communication unit 114 to transmit information associated with the cancellation of any payment to the POS terminal 200 based on the body 100 entering a region (A) capable of short-range communication with the POS terminal 200 in a state receipt information associated with the any payment is displayed on the touch screen 151 (S822).

On the other hand, a specific signal sent from the POS terminal 200 may be a standby signal for receiving information associated with cancellation from the mobile terminal 100 through short-range communication.

In this case, when the standby signal is received from the POS terminal 200 through the short-range communication unit 114, the controller 180 of the mobile terminal 100 may control the short-range communication unit 114 to transmit information associated with the cancellation of the any payment to the POS terminal 200.

In other words, when the standby signal is received from the POS terminal 200, the controller 180 may omit the process of determining that the body 100 has entered a region (A) capable of short-range communication with the POS terminal 200. However, the present disclosure may not be necessarily limited to this, and it should be understood by those skilled in the art that that the controller 180 of the mobile terminal 100 can determine that the body 100 has entered a region (A) capable of short-range communication with the POS terminal 200 when the standby signal is received from the POS terminal 200 through the short-range communication unit 114.

The information associated with the cancellation of the any payment may include paid payment amount information, paid product (item) information, payment method information used for a payment, payment method information different from the payment method information, and the like.

Though not shown in the drawing, the present disclosure may further include a user authentication process as described at step S622 in FIG. 6. The user authentication process may be carried out prior to step S810, between the step S810 and the step 820 or between the step S820 and the step S822.

Then, according to the present disclosure, the process of allowing the POS terminal 200 that has received information associated with the cancellation of any payment to request payment cancellation is carried out (S830).

Requesting the payment cancellation may include the meaning of transmitting information associated with the cancellation of any payment (i.e., paid payment amount information, paid product (item) information, payment method information used for a payment, payment method information different from the payment method information, etc.) received from the mobile terminal 100 to the payment server 300.

The payment server 300 performs the authorization of payment cancellation based on the payment cancellation request (S832). Here, performing the authorization of payment cancellation may include the process of transmitting information for notifying that payment cancellation has been authorized (completed) or information associated with cancellation complete (payment cancellation complete information) to the POS terminal 200.

The POS terminal 200 that has received information for notifying that payment cancellation has been authorized or information associated with cancellation complete (payment cancellation complete information) may transmit information associated with cancellation complete (payment cancellation complete information) to the mobile terminal 100 through short-range communication (S840). Meanwhile, the information associated with cancellation complete (payment cancellation complete information) may be directly transmitted to the mobile terminal 100 from the payment server 300 through wireless communication (S842).

The information associated with cancellation complete may include information associated with payment cancellation target product (for example, product name, product quantity), payment amount information and payment method information that has cancelled a payment.

The mobile terminal 100 that has received information associated with cancellation complete may display cancellation receipt information on the touch screen 151. When a payment-completed subject is any payment, cancellation receipt information associated with the any payment may be displayed on the touch screen 151 (S650).

The cancellation receipt information may be generated and then transmitted from the POS terminal 200 or payment server 300 or generated from the mobile terminal 100.

According to a payment cancellation method, the description of FIG. 7 will be analogically applied to the present disclosure in the same or similar manner.

Referring to FIG. 9, the controller 180 may control the short-range communication unit 114 to transmit information associated with the cancellation of any payment to the POS terminal 200 based on the passage of a preset period of time subsequent to the body 100 entering a region (A) capable of short-range communication with the POS terminal 200 in a state that receipt information 900 associated with the any payment is displayed on the touch screen 151.

Specifically, the information associated with the cancellation of any payment may be transmitted to the POS terminal 200 based on the passage of a preset period of time (t_1) subsequent to the body 100 entering a region (A) capable of short-range communication with the POS terminal 200.

The preset period of time may be set by a user or vary based on a user request. Furthermore, the preset period of time may perform the role of checking user's intention desired to perform a payment.

For example, t_1 illustrated in FIG. 9A is the preset period of time, and t_2 denotes a time at which payment cancellation is completed subsequent to transmitting the information associated with the cancellation of a payment. t_2 may be determined and varied based on at least one of a short-range communication speed between the mobile terminal 100 and POS terminal 200, an operation processing speed of the POS terminal 200, a communication speed between the POS terminal 200 and payment server 300, an operation processing speed of the payment server 300, and a wireless communication speed between the mobile terminal 100 and payment server 300.

In a state that receipt information 900 associated with any payment is displayed to cancel the any payment as illustrated in FIG. 9A, the controller 180 may transmit information associated with the cancellation of the any payment to the POS terminal 200 through the short-range communication unit 114 based on the passage of a preset period of time (t_1) subsequent to the body 100 entering a region (A) capable of short-range communication with the POS terminal 200 (more specifically, subsequent to sensing the POS terminal 200 capable of short-range communication).

Here, when the body 100 is out of the region (A) subsequent to the passage of the preset period of time (t_1), cancellation receipt information 910 associated with the relevant payment may be displayed based on cancellation complete information received from at least one of the POS terminal 200 and payment server 300 on the touch screen 151 as illustrated in FIG. 9B.

When the body 100 is out of the region (A) prior to the passage of the preset period of time (t_1), the controller 180 may not transmit information associated with the cancellation of the any payment to the POS terminal 200. In this case, notification information 920 for notifying that payment cancellation is failed and an icon linked with a function of returning to previous screen information may be displayed on the touch screen 151 as illustrated in FIG. 9C.

On the other hand, when the body 100 is out of the region (A) prior to the passage of a period of time (t_2), the controller 180 may receive information associated with payment cancellation from the payment server 300, and the controller 180 may receive information associated with payment cancellation from the POS terminal 200 when the body 100 exists in the region (A) until the passage of the period of time (t_2). When the body 100 exists in the region (A) until the passage of the period of time (t_2), the controller 180 may also receive information associated with payment cancellation from the POS terminal 200 and payment server 300.

As described above, the present disclosure may cancel a payment based on the passage of a preset period of time subsequent to the mobile terminal entering a region capable of short-range communication with the POS terminal. Accordingly, the present disclosure may provide a payment cancellation method capable of checking user's intention desired to cancel a payment.

On the other hand, a mobile terminal associated with the present disclosure capable of including at least one of the foregoing constituent elements may display receipt information in various ways to perform payment cancellation.

Hereinafter, various embodiments of displaying receipt information according to the present disclosure will be described in more detail with reference to the accompanying drawings.

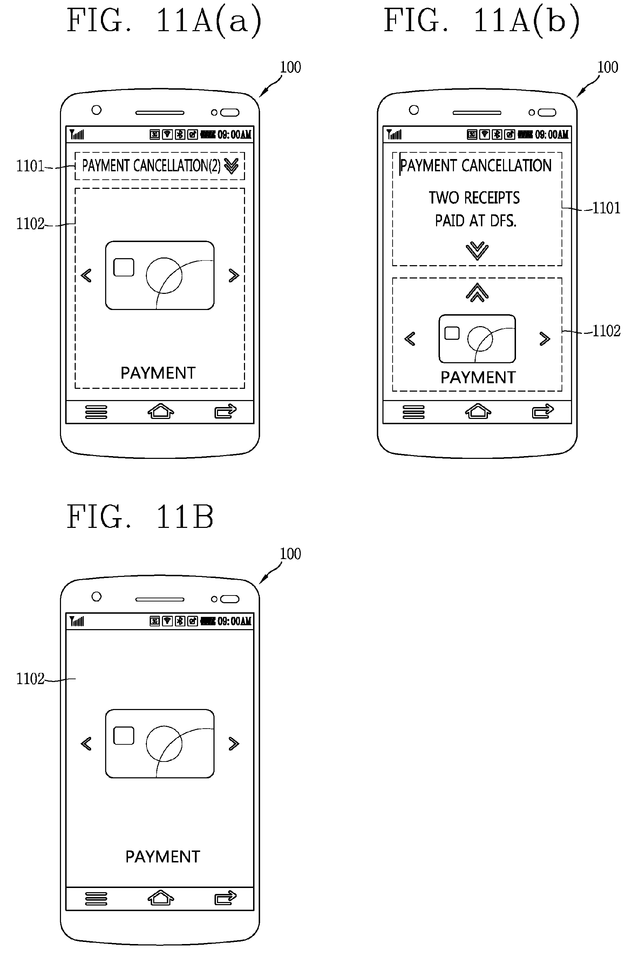

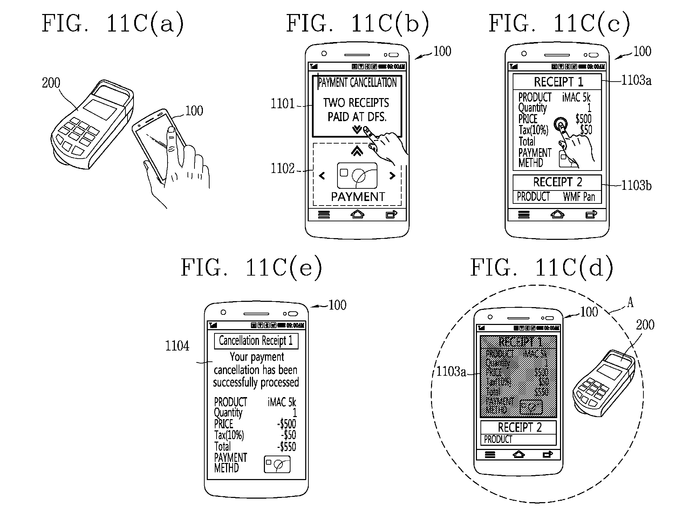

FIG. 10 is a flow chart for explaining a method of displaying different screen information associated with a payment based on whether or not a preset condition is satisfied when a mobile terminal according to an embodiment of the present disclosure enters a region capable of short-range communication with a POS terminal, and FIGS. 11 A, 11 B and 11C are conceptual views for explaining the method illustrated in FIG. 10.

First, referring to FIG. 10, according to a mobile terminal 100 associated with the present disclosure, the process of allowing the body 100 to enter a region (A) capable of short-range communication with the POS terminal 200 in a state that receipt information associated with any payment is not displayed is carried out (S1010).

Specifically, when the body 100 enters a region (A) capable of short-range communication with the POS terminal 200 in a state that the receipt information (or a list including receipt information) is not displayed, the controller 180 may display screen information associated with a payment on the touch screen 151. If the body 100 enters the region (A) in a state that receipt information associated with any payment is displayed touch screen 151, the controller 180 may transmit information associated with the any payment to the POS terminal 200.

The controller 180 may display screen information associated with the any payment based on the entry regardless of whether the touch screen 151 is in an active state or inactive state. The description of FIGS. 7A(a), 7A(b) and 7A(c) will be analogically applied to the description thereof in the same or similar manner.

The touch screen 151 of the mobile terminal 100 associated with the present disclosure may be in an active state as illustrated in FIG. 7A(a) or in an inactive state as illustrated in FIG. 7A(b)

. When the touch screen 151 is in an active state as illustrated in FIG. 7A(a), any screen information may be displayed on the touch screen 151. The screen information may be all types of screen information (or execution screens) excluding receipt information (or a list including receipt information) that can be displayed on the mobile terminal.

Specifically, when the body 100 enters the region (A) in a state that receipt information associated with any payment is not displayed on the touch screen 151, the controller 180 may display screen information associated with a payment on the touch screen 151.

If the touch screen 151 is in an inactive state prior to the body 100 entering the region (A), then the controller 180 may switch the touch screen 151 from an inactive state to an active state based on the entry to display screen information associated with the payment.

Screen information associated with a payment displayed based on the body 100 entering the region (A) in a state that the receipt information is not displayed may vary based on whether or not a preset condition is satisfied. In other words, the type of screen information associated with the payment may vary based on whether or not a preset condition is satisfied.

Specifically, when the body 100 enters a region (A) capable of short-range communication with the POS terminal 200 in a state that receipt information (or a list including receipt information) is not displayed, the controller 180 may determine whether or not a preset condition is satisfied (S1020).

The preset condition may be at least one of whether or not any payment corresponding to the receipt information is within a reference time subsequent to the execution thereof, whether or not the body 100 is out of a reference region (preset range) with respect to the POS terminal 200 that has performed the any payment, whether or not the POS terminal performing short-range communication is a POS terminal that has performed the any payment (or whether or not a payment with the POS terminal performing short-range communication has been carried out and whether or not a payment cancellation signal is received from any POS terminal 200 (or the POS terminal 200 that has performed the any payment).

For example, when the preset condition is not satisfied, the controller 180 may display first screen information associated with a payment on the touch screen 151 (S1030). For example, when the body 100 enters a region (A) capable of short-range communication with the POS terminal 200, the controller 180 may display first screen information associated with a payment when the POS terminal 200 has not previously performed a payment with the relevant mobile terminal 100.

The first screen information may include only an image corresponding to payment method information (or image associated with a payment method) 1102 as illustrated in FIG. 11 B. In other words, when the body 100 enters a region (A) capable of short-range communication with the POS terminal 200, the controller 180 may control the touch screen 151 to display only the image 1102 corresponding to payment method information on the touch screen 151 when the preset condition is not satisfied. The first screen information may be referred to as a "general payment screen".

Then, for an example, the controller 180 may transmit payment method information linked with the image 1102 to the POS terminal 200 through short-range communication based on user authentication being successful, based on the body 100 being maintained in the region (A) for a preset period of time, based on the body 100 coming out of the region (A) and then entering again the region (A) or a graphic object linked with a payment method information transmission function being selected in a state that the first screen information is displayed.

The image 1102 corresponding to payment method information contained in the first screen information may be changed to an image corresponding to another payment method information based on a preset type of touch (for example, a short touch, a swipe touch, a flick touch, a drag touch, etc.)

For another example, when the preset condition is satisfied, the controller 180 may display second screen information associated with a payment from the first screen information on the touch screen 151 (S1040). Herein, the second screen information may be different from the first screen information. For example, when the body 100 enters a region (A) capable of short-range communication with the POS terminal 200, the controller 180 may display second screen information associated with the payment when the POS terminal 200 is a POS terminal that has previously performed a payment with the relevant mobile terminal 100.

The second screen information may include at least one of an image 1102 corresponding to payment method information (or image associated with a payment method) and a graphic object 1101 indicating that there is receipt information. In other words, if the preset condition is satisfied when the body 100 enters a region (A) capable of short-range communication with the POS terminal 200, then the controller 180 may control the touch screen 151 to display second screen information including an image 1102 corresponding to payment method and a graphic object 1101 indicating that there is receipt information associated with a payment carried out through the relevant POS terminal 200 on the touch screen 151. The second screen information may be referred to as a "simple payment screen."

When a preset type of touch (for example, a short touch, a long touch, a double touch, a drag touch, etc.) is applied to a graphic object 1101 displayed on the touch screen 151 as illustrated in FIG. 11A(a), the controller 180 may change a size of the graphic object 1101 as illustrated in FIG. 11 A(b). Additional information may be further displayed on the graphic object 1101 as the size of the graphic object 1101 is increased.

The preset type of touch may include various types of touches. For example, the various types of touches may include a short (or tap) touch, a long touch, a double touch, a multi touch, a drag touch, a flick touch, a pinch-in touch, a pinch-out touch, a swipe touch, a hovering touch and the like.

Hereinafter, the various types of touches will be described in more detail.

A short (or tap) touch may be a touch in which a touch subject (for example, a finger, a stylus pen, etc.) is in contact with the touch screen 151 (or a touch is applied) and then released within a predetermined period of time. For example, the short (or tap) touch may be a touch in which a touch subject is in contact with the touch screen for a short period of time like a single click of mouse.

A long touch may be a touch in which a touch subject is in contact with the touch screen 151 and then maintained for more than a predetermined period of time. For example, the long touch may be a touch in which a touch is applied to the touch screen 151 by a touch subject and then the touch is maintained for more than a predetermined period of time. More specifically, the long touch may be a touch in which the touch is maintained at one position on the touch screen for a predetermined period of time and then released therefrom. Furthermore, the long touch may be understood as a touch corresponding to a touch-and-hold operation in which the contact state of a touch subject is maintained on the touch screen 151 for more than a predetermined period of time.

A double touch may be a touch in which the short touch is consecutively applied to the touch screen 151 at least twice within a predetermined period of time.

A predetermined period of time described in the short touch, long touch and double touch may be determined by user's setting

A multi touch may be a touch being applied to at least two contact positions on the touch screen 151 at substantially the same time point.

A drag touch may be a touch in which a contact started from a first position of the touch screen 151 is consecutively applied on the touch screen along one direction and then the contact is released from a second position different from the first position.

Specifically, the drag touch may be a touch applied to one position of the touch screen 151 by a touch subject being consecutively extended while being maintained on the touch screen 151 and then released from a position different from said one position.

Furthermore, the drag touch may denote a touch in which the touch is applied to one position of the touch screen 151 and then consecutively extended from the touch.

A flick touch may be a touch in which the drag touch is applied within a predetermined period of time. Specifically, the flick touch may be a touch in which a touch subject applying the drag touch is released from the touch screen 151 within a predetermined period of time. In other words, the flick touch may be understood as a drag touch applied at a speed above a predetermined speed.

A swipe touch may be a drag touch applied in a straight line.

A pinch-in touch may be a touch in which at least one of a first and a second touch applied to different two positions (separate two positions) on the touch screen 151 is extended in a direction closer to each other. For example, the pinch-in touch may be a touch implemented by an operation of decreasing a distance between two fingers in a state that the fingers are in contact with separate two positions, respectively, on the touch screen 151.

A pinch-out touch may be a touch in which at least one of a first and a second touch applied to different two positions (separate two positions) on the touch screen 151 is extended in a direction away from each other. For example, the pinch-out touch may be a touch implemented by an operation of increasing (extending) a distance between two fingers in a state that the fingers are in contact with separate two positions, respectively, on the touch screen 151.

A hovering touch may be a touch corresponding to the operation of a touch subject in a space away from the touch screen 151 while the touch subject is not in contact with the touch screen 151, and for an example, may be a proximity touch as illustrated in FIG. 1A. For example, the hovering touch may be a touch corresponding to an operation in which the touch subject is maintained at one position separated from the touch screen 151 for more than a predetermined period of time.

According to the present disclosure, it will be described that the preset type of touch is a drag touch, for example. However, the foregoing various types of touches will be analogically applied to the preset type of touch in the same or similar manner.

An embodiment in case where the preset condition is satisfied will be described in more detail with reference to FIG. 11C.

When the body 100 enters a region (A) capable of short-range communication with the POS terminal 200 as illustrated in FIG. 11C(a), and the preset condition is satisfied (for example, when a payment has been carried out through the POS terminal 200), the controller 180 may display second screen information associated with a payment as illustrated in FIG. 11 C(b).

An image 1102 corresponding to payment method information and a graphic object 1101 indicating that there is receipt information associated with a payment carried out through the POS terminal 200 may be displayed on the second screen information.

Specifically, receipt information may be stored in the memory unit 170. The receipt information may include POS terminal information that has performed a payment.

When the body 100 enters a region (A) capable of short-range communication with the POS terminal 200, the controller 180 may receive POS terminal information from the POS terminal 200. Then, the controller 180 may extract (decide, determine) receipt information associated with payments carried out through the POS terminal 200 among the stored receipt information based on the received POS terminal information.

When a preset type of touch (for example, a short touch or drag touch) is applied to the graphic object 1101 in a state that the second screen information is displayed on the touch screen 151, the controller 180 may display receipt information 1103a, 1103b associated with payments carried out through the POS terminal 200 on the touch screen 151 as illustrated in FIG. 11 C(c).

The number of receipt information 1103a, 1103b associated with payments carried out through the POS terminal 200 may correspond to the number of payments carried out through the POS terminal 200.

Furthermore, when the number of payments carried out through the POS terminal 200 is a plural number, a plurality of receipt information 1103a, 1103b may be displayed on the touch screen 151 as illustrated in FIG. 11 C(c).

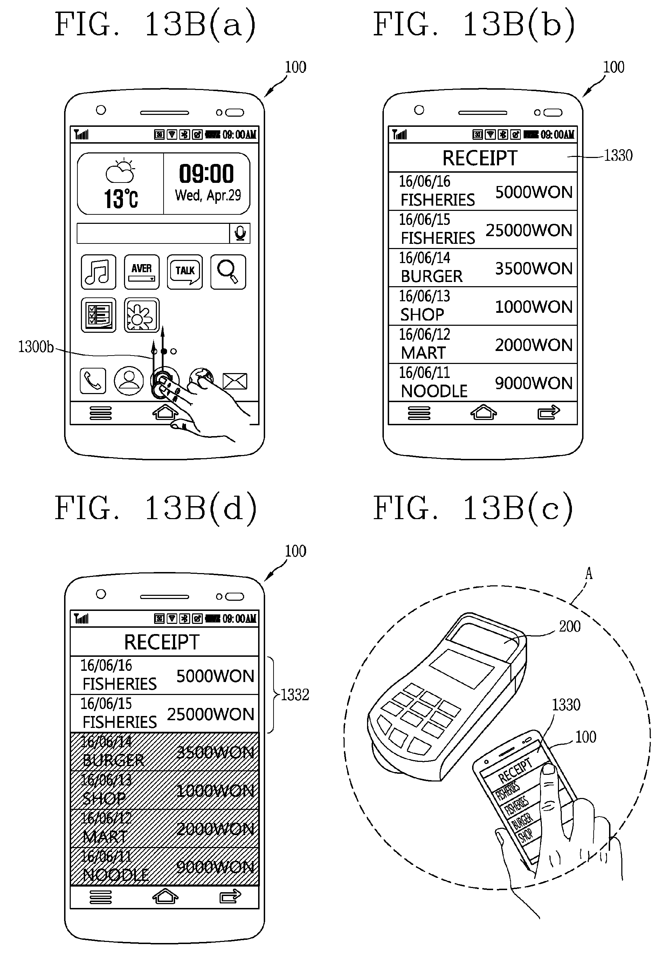

On the other hand, they may be displayed on the touch screen 151 in the form of a list including at least one receipt information (refer to FIG. 13B(b)).

Here, in case where a plurality of receipt information 1103a, 1103b are displayed on the touch screen 151, when a preset type of touch (for example, short touch) is applied to one receipt information 1103a of the plurality of receipt information 1103a, 1103b, the controller 180 may select receipt information 1103a to which the touch is applied as illustrated in FIG. 11C(d). Here, the selected receipt information 1103a may be displayed in a visually differentiated manner from the remaining non-selected receipt information.

When the body 100 enters a region (A) capable of short-range communication with the POS terminal 200 as illustrated in FIG. 11 C(d) in a state that receipt information is selected, the controller 180 may transmit information associated with the cancellation of a payment corresponding to the selected receipt information to the POS terminal 200. However, the present disclosure may not be necessarily limited to this, and the controller 180 may transmit information associated with the cancellation of a payment corresponding to the selected receipt information based on the selection when the body 100 exists within a region (A) capable of short-range communication with the POS terminal 200.

Then, when information associated with the cancellation complete of a payment corresponding to the selected receipt information is received from at least one of the POS terminal 200 and payment server 300 as illustrated in FIG. 11C(e), the controller 180 may transmit cancellation receipt information 1104 associated with a payment corresponding to the selected receipt information on the touch screen 151.

However, the present disclosure may not be necessarily limited to this, and when a preset type of touch is applied to at least one receipt information 1103a of the plurality of receipt information 1103a, 1103b (when the at least one receipt information 1103a is selected), the controller 180 may transmit information associated with the cancellation of a payment corresponding to the selected receipt information 1103a to the payment server 300. To this end, the receipt information 1103a may be linked with (may include) payment server information that has authorized a payment corresponding to the selected receipt information 1103a. Furthermore, the controller 180 may determine a payment server to which information associated with the cancellation of a payment corresponding to the selected receipt information 1103a is transmitted based on payment method information included in the selected receipt information.

On the other hand, the controller 180 may determine an object to which information associated with the cancellation of a payment corresponding to the selected receipt information 1103a is transmitted in various ways. For example, upon selecting receipt information, the controller 180 may transmit information associated with the cancellation of a payment corresponding to the selected receipt information to at least one of the POS terminal 200 and payment server 300 based on whether or not the body 100 exists within a region (A) capable of short-range communication with the POS terminal 200.

In other words, the controller 180 may request payment cancellation (transmit information associated with the cancellation of a payment) to the POS terminal 200 when the body 100 exists within the region (A) upon selecting receipt information, and request payment cancellation to the payment server 300 when the body 100 does not exist within the region (A) upon selecting receipt information. It should be understood by those skilled in the art that that the controller 180 can request payment cancellation even to the payment server 300 when the body 100 exists within the region (A) upon selecting receipt information.

For another example, the controller 180 may transmit information associated with the cancellation of a payment corresponding to the selected receipt information to at least one of the POS terminal 200 and payment server 300 based on a method of selecting receipt information. For example, when a first type of touch is applied to receipt information (selected with a first type), the controller 180 may request payment cancellation to the POS terminal 200. When a second type of touch different from the first type of touch is applied to receipt information (selected with a second type), the controller 180 may request payment cancellation to the payment server 300. It should be understood by those skilled in the art that the controller 180 can request payment cancellation even to the payment server 300 when a first type of touch is applied to receipt information (selected with a first type).

On the other hand, though not shown in the drawing, when the body 100 enters a region capable of short-range communication with the POS terminal 200 that has performed any payment within a reference period of time from a time point at which the any payment is carried out in a state that receipt information is not displayed on the touch screen 151, the controller 180 may display receipt information associated with the any payment on the touch screen 151. In other words, when the body 100 enters a region capable of short-range communication with the POS terminal 200 that has performed a payment within a reference period of time since performing the payment, the controller 180 may immediately display receipt information associated with the performed payment on the touch screen 151.

The receipt information associated with the performed payment may be information associated with a payment that has been most recently carried out through the POS terminal 200.

However, the present disclosure may not be necessarily limited to this, and when the body 100 enters a region capable of short-range communication with the POS terminal 200 that has performed a payment, the controller 180 may control the touch screen 151 to immediately display receipt information associated with a payment that has been most recently (lately) carried out through the POS terminal 200.

Through the foregoing configuration, the present disclosure may display screen information associated with a payment based on the mobile terminal entering a region capable of short-range communication with the POS terminal. Accordingly, the present disclosure may display screen information associated with a payment by allowing the mobile terminal to be in proximity to the POS terminal 200 without the need of allowing a user to display screen information associated with a payment through additional manipulation.

The present disclosure may provide a user interface capable of more conveniently displaying receipt information associated with a payment desired to be cancelled in the relevant POS terminal based on the mobile terminal entering a region capable of short-range communication with the POS terminal in a state that a preset condition is satisfied.

On the other hand, the present disclosure may display receipt information in various ways even when the body does not enter a region capable of performing short-range communication with the POS terminal. Hereinafter, a method of displaying receipt information according to the present disclosure will be described in more detail with reference to the accompanying drawings.

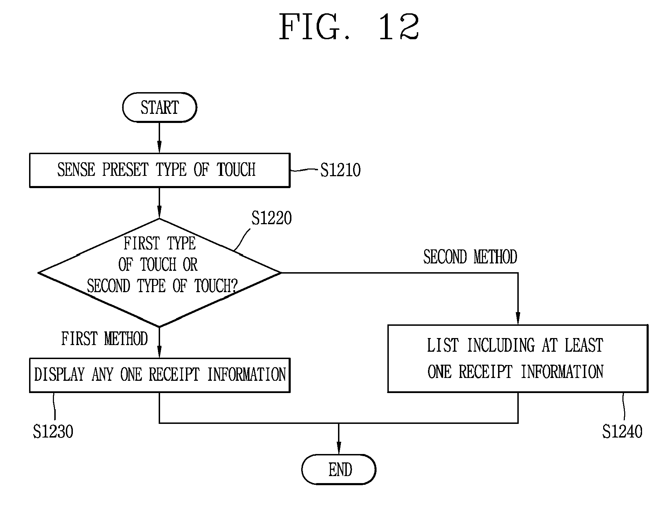

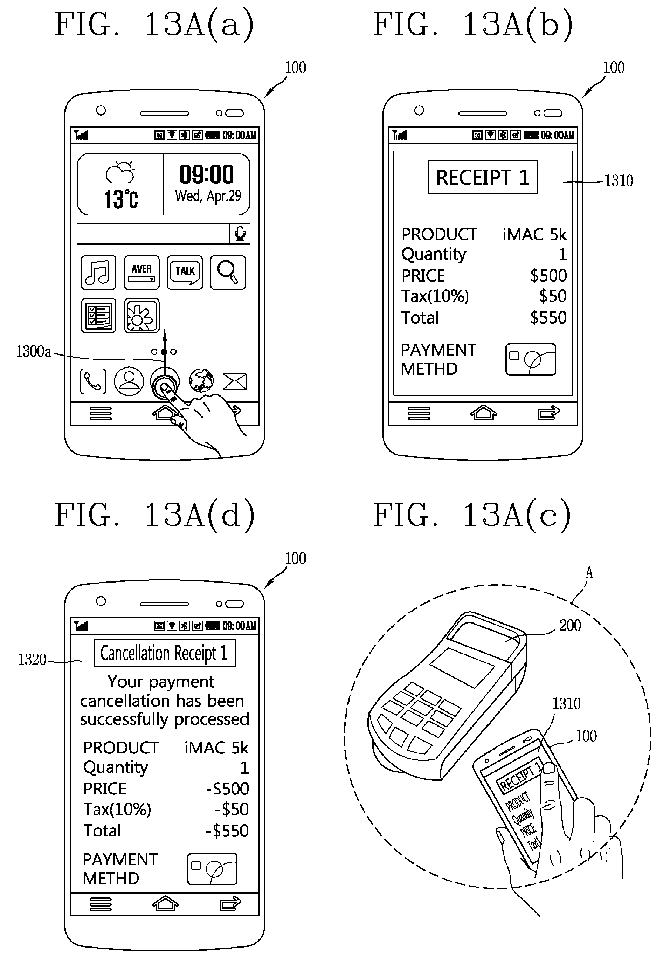

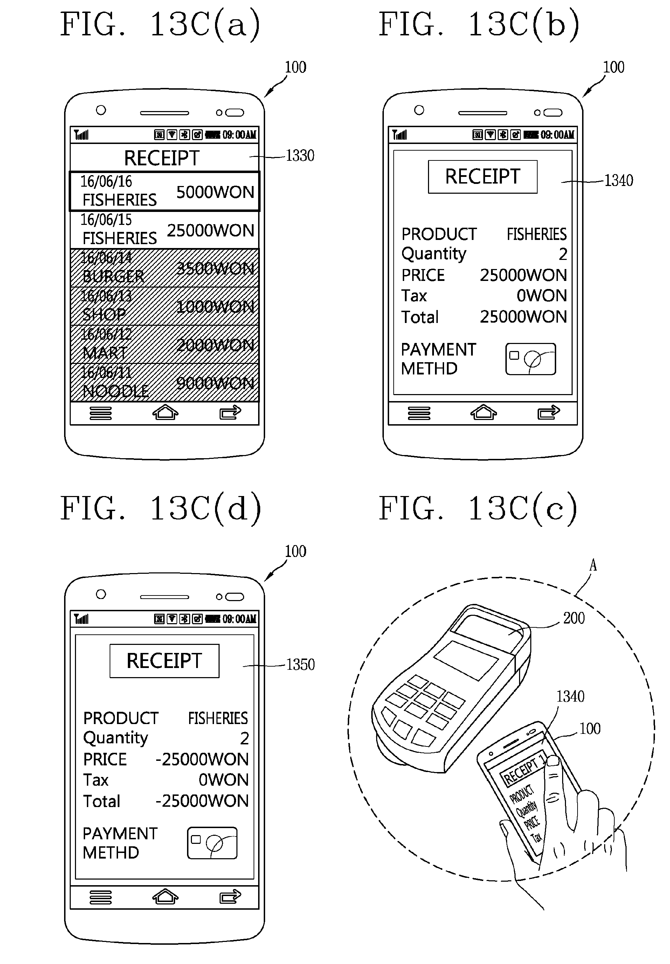

FIG. 12 is a flow chart for explaining a method of displaying different type of receipt information based on a preset type of touch applied to a mobile terminal according to an embodiment of the present disclosure, and FIGS. 13A, 13B and 13C are conceptual views for explaining the method illustrated in FIG. 12.

Referring to FIG. 12, according to the present disclosure, the process of sensing a preset type of touch applied to the touch screen 151 is carried out (S1210). Specifically, the controller 180 may sense a preset type of touch applied to the touch screen 151.

Here, the preset type of touch may be applied to the touch screen 151 when the touch screen 151 is in an active state, when the touch screen 151 is in an inactive state, when the body exists within a region (A) capable of short-range communication with the POS terminal or when the body does not exist within the region (A).

The controller 180 may display receipt information on the touch screen 151 based on a preset type of touch applied to the touch screen 151. The receipt information may be receipt information associated with a payment that has been most recently carried out through the mobile terminal 100 (or through the POS terminal 200). Furthermore, a plurality of receipt information may be displayed on the touch screen 151 based on the preset type of touch applied thereto.

On the other hand, the controller 180 may display a list including at least one receipt information based on the preset type of touch applied thereto.

The controller 180 may display different screen information associated with receipt information on the touch screen 151 based on a preset type of touch applied to the touch screen 151.

To this end, according to the present disclosure, the process of determining whether a preset type of touch applied to the touch screen 151 is a first type of touch or a second type of touch different from the first type of touch is carried out (S1220). However, it should be noted that the type of touch is not limited to those two types.

Then, the controller 180 may display one receipt information when a first type of touch is applied (S1230), and display a list including at least one receipt information on the touch screen 151 when a second type of touch different from the first type is applied (S1240).

More specifically, one receipt information may be displayed on the touch screen 151 when a preset first type of touch (or first type of touch) is applied thereto, and a list including at least one receipt information may be displayed when a preset second type of touch (or second type of touch) different from the preset first type is applied thereto.

For example, when a first type of touch 1300a (for example, a drag touch started from one position) is applied to the touch screen 151 as illustrated in FIG. 13A(a), the controller 180 may display one receipt information 1310 as illustrated in FIG. 13A(b). Said one receipt information may be receipt information associated with a payment that has been recently carried out, for an example. The preset first type of touch may be applied while the touch screen 151 is in an active state or applied while the touch screen 151 is in an inactive state.

On the other hand, the present disclosure may not be necessarily limited to this, and a plurality of receipt information may be displayed on the touch screen 151 based on the preset first type of touch applied thereto. In this case, the plurality of receipt information may be sequentially displayed in an overlapping manner according to a time point at which a payment corresponding to the plurality of receipt information, respectively, is carried out. In this case, the controller 180 may display all receipt information associated with payments that have been mostly recently carried out, and display only part of the remaining receipt information. All the displayed receipt information may be changed based on a preset type of touch (for example, a swipe/drag/flick touch, etc.) applied thereto.

For another example, when a preset second type of touch 1300b (for example, a drag touch started from at least two positions) is applied to the touch screen 151 as illustrated in FIG. 13B(a), the controller 180 may display a list 1330 including at least one receipt information as illustrated in FIG. 13B(b). The list 1330 may include at least one item, and at least part of receipt information (or information summarized with receipt information) may be displayed at each item. When any one of the items is selected (touched), the controller 180 may display receipt information corresponding to the selected item in an enlarged manner on the touch screen 151.

Hereinafter, for the sake of convenience of explanation, at least one item included in a list will be described as at least one receipt information included in a list.

On the other hand, when the body of the mobile terminal enters a region (A) capable of short-range communication with the POS terminal 200, the controller 180 may perform a different operation based on screen information displayed on the touch screen 151.

Specifically, the controller 180 may perform a first operation when the body 100 enters the region (A) in a state that one receipt information is displayed on the touch screen 151, and perform a second operation different from the first operation when the body 100 enters the region (A) in a state that a list including at least one receipt information is displayed on the touch screen.

Here, the first operation may be an operation of transmitting information associated with the cancellation of a payment corresponding to the displayed receipt information. The second operation may be an operation of controlling the touch screen to display receipt information associated with a payment carried out through the POS terminal among the at least one receipt information in a visually differentiated manner.

For example, as illustrated in FIG. 13A(c), when the body 100 enters a region (A) capable of short-range communication with the POS terminal 200 in a state that one receipt information 1310 is displayed on the touch screen 151, the controller 180 may transmit information associated with the cancellation of any payment corresponding to the one receipt information 1310 to the POS terminal 200 through short-range communication (first operation).

If a plurality of receipt information are displayed on the touch screen 151 and only any one receipt information is displayed as a whole, then the controller 180 may transmit information associated with the cancellation of a payment corresponding to the receipt information displayed as a whole to the POS terminal 200 through short-range communication based on the body 100 entering the region (A).

Then, as illustrated in FIG. 13A(d), cancellation receipt 1320 associated with a payment corresponding to the one receipt information 1310 may be displayed on the touch screen 151 based on information associated with cancellation complete received from at least one of the POS terminal 200 and payment server 300.

For another example, when the body 100 enters a region (A) capable of short-range communication with the POS terminal 200 in a state that a list 1330 including at least one receipt information is displayed on the touch screen 151 as illustrated in FIG. 13B(c), the controller 180 may display receipt information associated with a payment carried out through the POS terminal 200 among the at least one receipt information (item) as illustrated in FIG. 13B(d) in a visually differentiated manner from the remaining receipt information. For an example, the remaining receipt information may be shaded or disappear from the touch screen 151.

In other words, when the POS terminal 200 is a POS terminal 200 at "C-fisheries," the controller 180 may display only receipt information 1332 paid at "C-fisheries" among a list including at least one receipt information. Such a function may be understood as a sorting function.

When any one receipt information is selected in a state that receipt information associated with a payment carried out through the POS terminal 200 desired to perform short-range communication is displayed in a visually differentiated manner from the remaining receipt information as illustrated in FIG. 13C(a), the controller 180 may display the selected any one receipt information in an enlarged manner on the touch screen as illustrated in FIG. 13C(b).

When the body 100 enters a region (A) capable of short-range communication with the POS terminal 200 as illustrated in FIG. 13C(c) in a state that the enlarged any one receipt information 1340 is displayed on the touch screen as illustrated in FIG. 13C(b), the controller 180 may transmit information associated with the cancellation of a payment corresponding to the enlarged any one receipt information 1340 to the POS terminal 200 through the short-range communication unit 114.

Then, when information associated with cancellation complete is received from at least one of the payment server 300 and POS terminal 200, the controller 180 may display cancellation receipt 1350 associated with a payment corresponding to the enlarged any one receipt information 1340 on the touch screen 151 as illustrated in FIG. 13C(d).

Through the foregoing configuration, the present disclosure may display receipt information based on a preset type of touch applied to the touch screen, and display different screen information associated with receipt information according to the type of touch, thereby providing an optimal UI/UX capable of allowing a user to display receipt information in his or her desired format in a more convenient manner.

Furthermore, the present disclosure may perform a different operation according to screen information displayed on the touch screen when the mobile terminal enters a region capable of short-range communication with the POS terminal. For example, the present disclosure may perform a payment cancellation function when the mobile terminal enters the region in a state that one receipt information is displayed. Furthermore, when the mobile terminal enters the region in a state that a list including at least one receipt information is displayed, the present disclosure may display receipt information associated with a payment carried out through the relevant POS terminal among the at least one receipt information included in the list in a visually differentiated manner. Accordingly, the user may provide a user interface capable of displaying receipt information generated by a payment of the relevant POS terminal in a more conveniently differentiated manner.

On the other hand, the present disclosure may cancel a plurality of payments using a list including at least one receipt information.

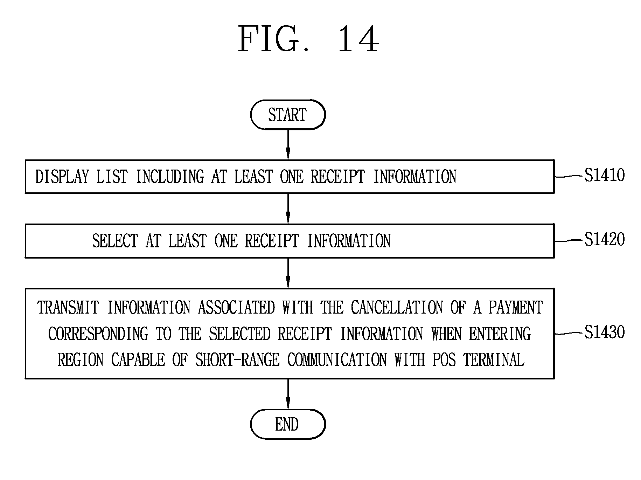

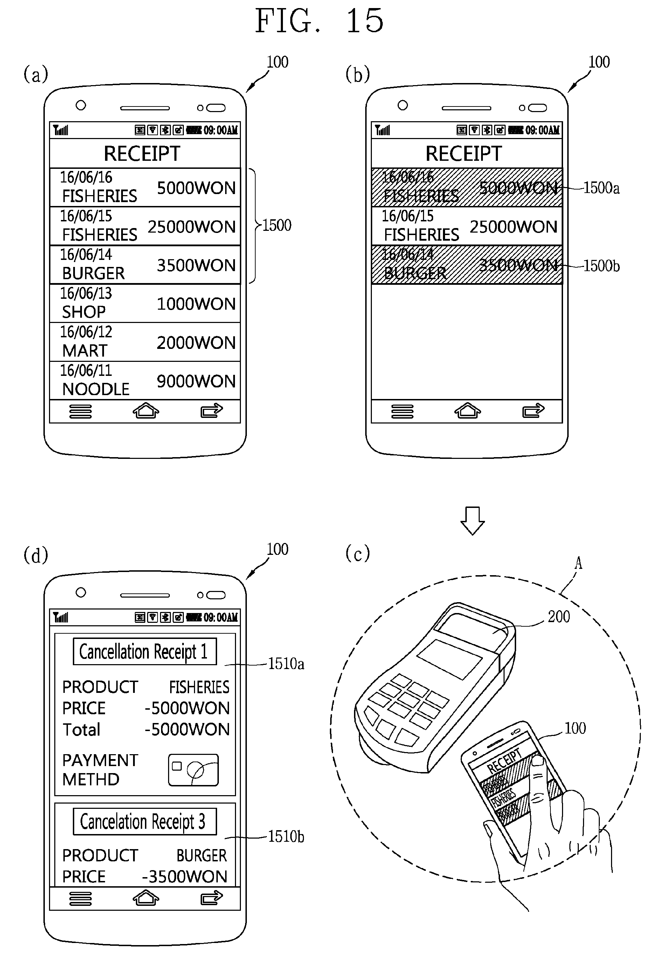

FIG. 14 is a flow chart for explaining a method of cancelling a payment using a list containing at least one receipt information according to an embodiment of the present disclosure, and FIG. 15 is a conceptual view for explaining the method illustrated in FIG. 14.

Referring to FIG. 14, at least one receipt information may be displayed on the touch screen 151 (S1410). For example, the list may be displayed based on a preset type of touch applied to a graphic object 1101 contained in second screen information associated with a payment as illustrated in FIG. 11C or displayed based on a preset second type of touch applied to the touch screen 151 as illustrated in FIG. 13B.

Then, the controller 180 may select at least one receipt information among receipt information included in the list (S1420). The selection may be carried out based on a preset type of touch applied thereto. For example, when a preset type of touch (for example, a long touch) is applied to any one of at least one receipt information (item) included in the list, the controller 180 may select receipt information (item) to which the touch is applied.

Then, when the body 100 enters a region (A) capable of short-range communication with the POS terminal 200 in a state that at least one receipt information is selected from the list, the process of allowing the controller 180 to transmit information associated with the cancellation of a payment corresponding to the selected receipt information to the POS terminal 200 is carried out (S1430).

Then, when information associated with cancellation complete is received from at least one of the payment server 300 and POS terminal 200, the controller 180 may display cancellation receipt information associated with a payment corresponding to the selected receipt information on the touch screen 151.

FIG. 15 illustrates an embodiment in which the description of FIG. 13C and the description of FIG. 14 are combined.

Referring to FIG. 15, a list including at least one receipt information may be displayed on the touch screen 151 as illustrated in FIG. 15A. When the body 100 enters a region (A) capable of short-range communication with the POS terminal 200 in a state that the list is displayed, the controller 180 may display receipt information 1500 associated with a payment carried out through the POS terminal 200 in a visually differentiated manner from the other receipt information and remaining receipt information.

For example, as illustrated in FIG. 15B, the controller 180 may control the touch screen 151 to display only the receipt information 1500 associated with a payment carried out through the POS terminal 200 among at least one receipt information included in a list on the list.

Then, as illustrated in FIG. 15B, the controller 180 may select at least one receipt information among the displayed receipt information. The selection may be carried out based on a preset type of touch (for example, a long touch) or carried out based on a touch applied subsequent to entering an additional selection mode. Though not shown in the drawing, an entry to the selection mode may be carried out based on an icon linked with the selection mode entry function being selected (touched).

As illustrated in FIG. 15C, when the body 100 entering a region (A) capable of short-range communication with the POS terminal 200 is sensed in a state that the at least one receipt information 1500a, 1500b is selected, the controller 180 may transmit information associated with the cancellation of a payment corresponding to the at least one receipt information 1500a, 1500b to the POS terminal 200 through the short-range communication unit 114.

Then, when information associated with cancellation complete is received from at least one of the payment server 300 and POS terminal 200, the controller 180 may display cancellation receipt information 1510a, 1510b associated with a payment corresponding to the at least one receipt information 1500a, 1500b on the touch screen 151 as illustrated in FIG. 15D.

Through the foregoing configuration, it may be possible to provide a method of capable of cancelling a plurality of payments corresponding to a plurality of receipt information at once using a list including receipt information.

On the other hand, the present disclosure may cancel at least part of payment products (payment items) included in one payment. Hereinafter, a method of cancelling at least part of payment products included in one payment according to the present disclosure will be described in more detail with reference to the accompanying drawings.

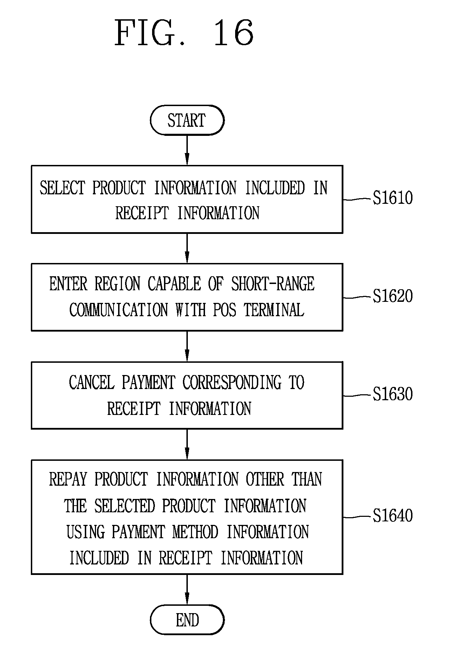

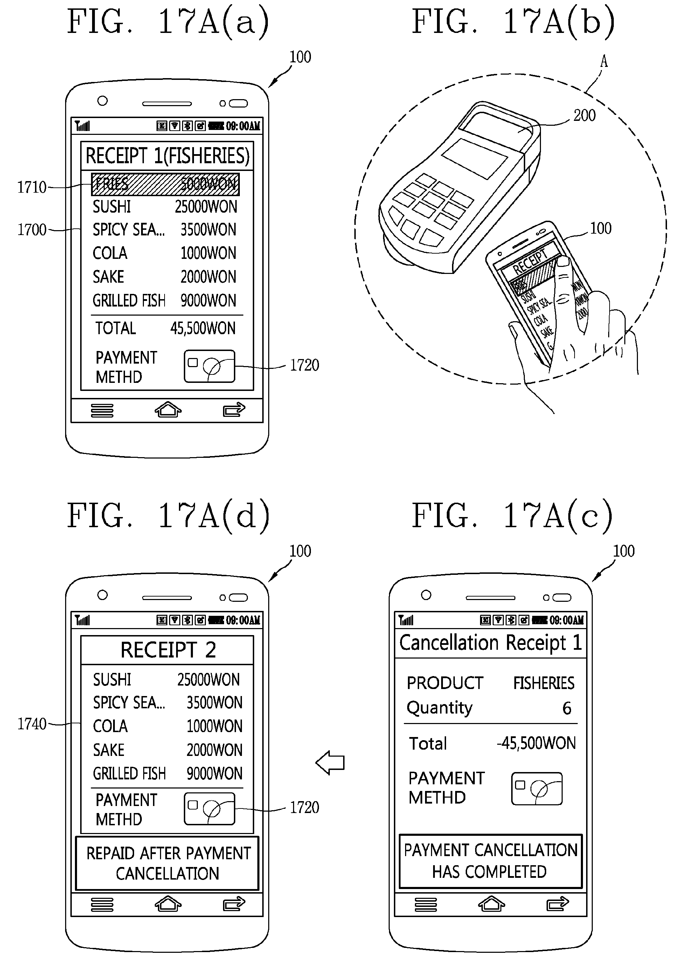

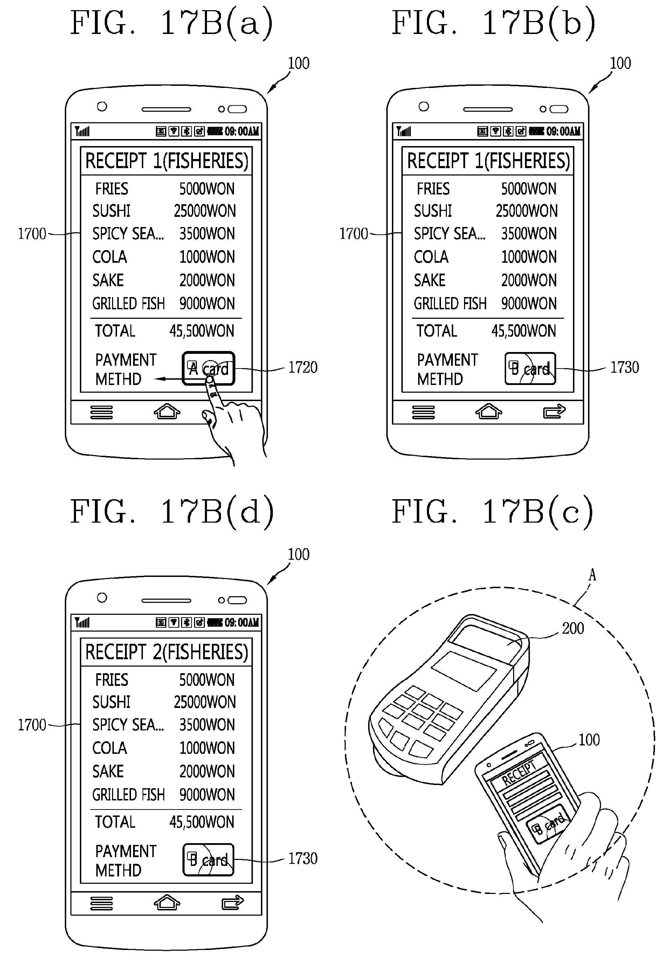

FIG. 16 is a flow chart for explaining a method of performing repayment excluding at least part of product information contained in receipt information using the receipt information according to an embodiment of the present disclosure, and FIGS. 17A and 17B are conceptual views for explaining the method illustrated in FIG. 16.

The receipt information may include product information. The product information may denote information associated with the foregoing payment target product (item). Specifically, the product information may denote information on products (items) included in any payment, and the number of product information included in one receipt information may be one or at least two or more.

The controller 180 may select product information included in receipt information (S1610). For example, as illustrated in FIG. 17A(a), when a preset type of touch (for example, a short touch, a long touch, etc.) is applied to product information displayed on receipt information 1700, the controller 180 may select product information 1710 to which the touch is applied.

Then, according to the present disclosure, as illustrated in FIG. 17A(b), the process of allowing the body 100 to enter a region capable of short-range communication with the POS terminal 200 in a state that at least one product information 1710 is selected is carried out (S1620).

Then, according to the present disclosure, the process of requesting payment cancellation corresponding to the receipt information to the POS terminal is carried out (S1630). Specifically, when the body 100 enters the region (A) in a state that at least one product information included in the receipt information is selected, the controller 180 may transmit information associated with the cancellation of a payment corresponding to the receipt information to the POS terminal 200 through the short-range communication unit 114.

Moreover, according to the present disclosure, the process of performing a repayment for product information other than product information selected using payment method information included in the receipt information is carried out (S1640).

Specifically, when the body enters the region in a state that at least one product information included in receipt information associated with any payment is selected, the controller 180 may transmit information associated with the cancellation of any payment and information associated with a payment of the remaining product information other than the at least one product information at the same time to the POS terminal 200 through the short-range communication unit 114.

The information associated with a payment of the remaining product information as information associated with non-selected product information on the receipt information may include the product names of non-selected product information, product quantity, amount information, and the like.

Transmitting information associated with a payment of the remaining product information to the POS terminal 200 may include the meaning of requesting a payment for the remaining product information to the POS terminal 200.

The POS terminal 200 may transmit information associated with the cancellation of the any payment and information associated with a payment of the remaining product information to the payment server 300.

Then, the payment server 300 may cancel the any payment, and perform (authorize) a payment for the remaining product information based on the received information.

Then, the payment server 300 may transmit information associated with cancellation complete and payment complete information to at least one of the POS terminal and mobile terminal 100. When the information associated with cancellation complete and payment complete information are transmitted to the POS terminal 200, and the mobile terminal 100 exists within a region (A) capable of short-range communication with the POS terminal 200, the POS terminal 200 may transmit the information associated with cancellation complete and payment complete information to the mobile terminal 100 through short-range communication.

Then, cancellation receipt information associated with the any payment may be displayed on the touch screen 151 of the mobile terminal 100 that has received the information associated with cancellation complete as illustrated in FIG. 17A(c). Furthermore, new receipt information 1740 for notifying that a payment of the remaining product information has been carried out may be displayed on the touch screen 151 of the mobile terminal 100 that has received the payment cancellation information as illustrated in FIG. 17A(d).

On the other hand, the present disclosure may not be necessarily limited to this, and when the body enters the region in a state that at least one product information included in receipt information associated with any payment is selected, the controller 180 of the present disclosure may request partial cancellation for partially cancelling only a payment corresponding to at least one product information selected from the any payment to the POS terminal 200. To this end, when the body enters the region in a state that at least one product information included in receipt information associated with any payment is selected, the controller 180 may transmit information associated with the cancellation of a payment for the selected at least one product information (cancellation request information) to the POS terminal 200.

Then, when the partial cancellation is authorized by the payment server 300, the controller 180 may display the new receipt information 1740 on the touch screen 151 based on information associated with partial cancellation complete received from at least one of the payment server 300 and POS terminal 200.

On the other hand, receipt information 1700 associated with any payment may include a first image corresponding to payment method information used for the any payment as illustrated in FIG. 17B(a).

The first image may be changed to a second image 1730 corresponding to payment method information different from the payment method information based on a preset type of touch applied thereto as illustrated in FIG. 17B(b).

When the body enters the region in a state that the first image included in receipt information associated with the any payment is changed to the second image, the controller 180 may further transmit the different payment method information to the POS terminal 200 through the short-range communication unit 114 to perform the any payment again with the different payment method. Here, the different payment method information may be transmitted along with information associated with the cancellation of any payment.

For example, as illustrated in FIG. 17B(c), the body 100 may enter a region (A) capable of short-range communication with the POS terminal in a state that the first image 1720 included in receipt information associated with the any payment is changed to the second image 1730. In this case, the controller 180 may transmit information associated with the cancellation of any payment and different payment method information linked with the second image 1730 to the POS terminal 200 through the short-range communication unit 114 to perform the any payment again as different payment method corresponding to the second image 1730.

The POS terminal 200 may transmit the information associated with the cancellation of any payment and the different payment method information to the payment server 300.

Then, the payment server 300 may cancel the any payment based on the received information, and perform (authorize) the any payment again using the different payment method information.

Then, the payment server 300 may transmit information associated with cancellation complete and payment complete information to at least one of the POS terminal and mobile terminal 100. When the information associated with cancellation complete and payment complete information are transmitted to the POS terminal 200, and the mobile terminal 100 exists within a region (A) capable of short-range communication with the POS terminal 200, the POS terminal 200 may transmit the information associated with cancellation complete and payment complete information to the mobile terminal 100 through short-range communication.

Then, new receipt information 1760 for notifying that the any payment has been carried out again using the different payment method information as illustrated in FIG. 17B(d) on the touch screen 151 of the mobile terminal 100 that has received the payment complete information. The second image 1730 corresponding to the different payment method information may be displayed on the new receipt information 1760.

Though not shown in the drawing, cancellation receipt information associated with the any payment may be displayed on the touch screen 151 of the mobile terminal 100 that has received the information associated with cancellation complete.

On the other hand, the present disclosure may provide an embodiment in which FIG. 17A and 17B are combined.

For example, referring to FIGS. 17A(a) and 17B(a), the controller 180 may select at least one product information among product information included in receipt information associated with any payment and change a first image corresponding to payment method information used for the any payment to a second image corresponding to different payment method information.

When the body 100 enters a region (A) capable of short-range communication with the POS terminal 200 in a state that the at least one product information is selected, and the first image is changed to the second image, the controller 180 may request payment cancellation for the selected product information, and request to authorize a payment for the non-selected remaining product information using payment method information (i.e., the different payment method information) corresponding to the second image to the POS terminal 200 through the short-range communication unit 114.

To this end, the controller 180 may transmit information associated with the cancellation of any payment, information associated with a payment of the remaining product information and payment method information corresponding to the second image (i.e., the different payment method information) to the POS terminal 200 through the short-range communication unit 114.

The payment server 300 that has received the foregoing information through the POS terminal 200 may cancel the any payment, and authorize a payment for the remaining product information using the different payment method information.

Then, at least one of cancellation receipt information associated with the any payment and new receipt information indicating that a payment for the remaining product information has been completed may be displayed on the touch screen 151 of the mobile terminal 100 based on information associated with cancellation complete and payment complete information received from at least one of the payment server 300 and POS terminal 200.

The new receipt information may be stored in the memory unit 170.

Through the foregoing configuration, the present disclosure may provide a user interface for cancelling only a payment corresponding to the selected product information based on the mobile terminal entering a region capable of short-range communication with the POS terminal subsequent to selecting product information included in receipt information.

Furthermore, the present disclosure may change an image corresponding to a payment method included in receipt information. Furthermore, when the mobile terminal enters a region capable of short-range communication with the POS terminal 200 subsequent to changing an image corresponding to a payment method included in receipt information, the present disclosure may cancel a payment corresponding to receipt information, and perform the payment again with a payment method corresponding to the changed image. Through this, the present disclosure may provide an optimal UI/UX capable of changing a payment method to perform repayment in a more convenient manner.

On the other hand, the present disclosure may display receipt information, cancellation receipt information and new receipt information in an optimal method.

FIGS. 18A and 18B are conceptual views for explaining a method of displaying receipt information and cancellation receipt information associated with the present disclosure.

As illustrated in FIG. 18A, receipt information 1810 associated with any payment and cancellation receipt information 1800 associated with the any payment may be displayed at the same time on the touch screen 151. Similarly, as illustrated in FIG. 18B, receipt information 1850 associated with any payment, cancellation receipt information 1840 associated with the any payment and new receipt information 1830 indicating that at least one of partial cancellation of product information and repayment with another payment information for the any payment may be also displayed at the same time on the touch screen 151.

In other words, the controller 180 may group the receipt information 1810 and the cancellation receipt information 1800 as one group, and group the receipt information 1850, the cancellation receipt information 1840 and the new receipt information 1830 as one group.

Here, the sequence of displaying the foregoing information may be determined based on a time point at which a payment, payment cancellation or repayment is carried out. For example, as illustrated in FIG. 18A, the receipt information 1810 and the cancellation receipt information 1800 may be displayed in an overlapping manner, and the cancellation receipt information 1800 may be displayed as a whole on the first row since the cancellation receipt information 1800 is generated by an operation that has been carried out later (cancellation). In this case, part of the receipt information 1810 may be displayed in a restricted manner. Though not shown in the drawing, part of the cancellation receipt information 1800 may not be displayed while being displayed on the first row.

Similarly, the new receipt information 1830 may be displayed as a whole on the first row since the new receipt information 1830 is generated lately.

Then, they may be displayed in the sequence of the new receipt information 1830, the cancellation receipt information 1840 and the new receipt information 1830, and at least part of the information may not be displayed as illustrated in FIG. 18B.

As illustrated in FIGS. 18A and 18B, the controller 180 may change a display method in various ways in a state that a plurality of receipt information that have been grouped into one group are displayed. For example, when a drag touch (or a flick touch, a swipe touch, etc.) is applied in one direction (for example, in an upward or downward direction) in a state that the plurality of information are displayed, the controller 180 may change the sequence of overlapping the plurality of information. For example, when a drag touch applied in one direction is applied to the touch screen 151 in the foregoing state of FIG. 18A, the controller 180 may change the sequence of overlapping the receipt information 1810 and the cancellation receipt information to display the receipt information 1810 as a whole.

On the other hand, when a drag touch (or a flick touch, a swipe touch, etc.) applied in a direction different from the one direction (or in a direction perpendicular to the one direction) (for example, in a left or right direction) is applied to the touch screen 151, the controller 180 may display a plurality of receipt information corresponding to a second group different from a first group instead of a plurality of receipt information corresponding to the first group being displayed on the touch screen 151.

A portion of "through short-range communication" in the above description may include the meaning of "through the short-range communication unit 114," and vice versa.

As described above, the present disclosure may cancel a payment corresponding to the receipt information based on the mobile terminal entering a region capable of short-range communication with the POS terminal in a state that receipt information is displayed. Accordingly, the present disclosure may provide a UI/UX capable of allowing a user to cancel a payment in an optimal method.

Furthermore, when a payment corresponding to the receipt information is cancelled, the present disclosure may display cancellation receipt information along with the receipt information, thereby providing a user interface for allowing a user to more easily know that the relevant receipt information has been cancelled.

Furthermore, the present disclosure may display screen information associated with a payment based on the mobile terminal entering a region capable of short-range communication with the POS terminal. Accordingly, the present disclosure may display screen information associated with a payment by allowing the mobile terminal to be in proximity to the POS terminal 200 without the need of allowing a user to display screen information associated with a payment through additional manipulation.

Furthermore, the present disclosure may provide a user interface capable of more conveniently displaying receipt information associated with a payment desired to be cancelled in the relevant POS terminal based on the mobile terminal entering a region capable of short-range communication with the POS terminal in a state that a preset condition is satisfied.

Furthermore, the present disclosure may display receipt information based on a preset type of touch applied to the touch screen, and display different screen information associated with receipt information according to the type of touch, thereby providing an optimal UI/UX capable of allowing a user to display receipt information in his or her desired format in a more convenient manner.

Furthermore, the present disclosure may perform a different operation according to screen information displayed on the touch screen when the mobile terminal enters a region capable of short-range communication with the POS terminal. For example, the present disclosure may perform a payment cancellation function when the mobile terminal enters the region in a state that one receipt information is displayed. Furthermore, when the mobile terminal enters the region in a state that a list including at least one receipt information is displayed, the present disclosure may display receipt information associated with a payment carried out through the relevant POS terminal among the at least one receipt information included in the list in a visually differentiated manner. Accordingly, the user may provide a user interface capable of displaying receipt information generated by a payment of the relevant POS terminal in a more conveniently differentiated manner.

Furthermore, the present disclosure may provide a method of capable of cancelling a plurality of payments corresponding to a plurality of receipt information at once using a list including receipt information.

Furthermore, the present disclosure may cancel a payment based on the passage of a preset period of time subsequent to the mobile terminal entering a region capable of short-range communication with the POS terminal. Accordingly, the present disclosure may provide a payment cancellation method capable of checking user's intention desired to cancel a payment.

Furthermore, the present disclosure may provide a control method of cancelling a payment corresponding to receipt information, and performing repayment for the remaining product information other than the selected product information based on the mobile terminal entering a region capable of short-range communication with the POS terminal subsequent to selecting the product information included in the receipt information. Accordingly, the present disclosure may perform the cancellation of a payment corresponding to receipt information and a payment of the remaining product information other than the selected product information through one-time entry, thereby significantly enhancing the user's convenience. Furthermore, through this, it may be possible to provide a control method of having an effect of partial cancellation only with one-time entry when partial cancellation for a payment is not allowed.

Furthermore, the present disclosure may provide a user interface for cancelling only a payment corresponding to the selected product information based on the mobile terminal entering a region capable of short-range communication with the POS terminal subsequent to selecting product information included in receipt information.

Furthermore, the present disclosure may change an image corresponding to a payment method included in receipt information. Furthermore, when the mobile terminal enters a region capable of short-range communication with the POS terminal 200 subsequent to changing an image corresponding to a payment method included in receipt information, the present disclosure may cancel a payment corresponding to receipt information, and perform the payment again with a payment method corresponding to the changed image. Through this, the present disclosure may provide an optimal UI/UX capable of changing a payment method to perform repayment in a more convenient manner.

The foregoing present invention may be implemented as codes readable by a computer on a medium written by the program. The computer-readable media may include all kinds of recording devices in which data readable by a computer system is stored. Examples of the computer-readable media may include hard disk drive (HDD), solid state disk (SSD), ROM, RAM, CD-ROM, magnetic tape, floppy disk, and optical data storage device, and the like, and also include a device implemented in the form of a carrier wave (for example, transmission via the Internet). In addition, the computer may include the controller 180 of the terminal. Accordingly, the detailed description thereof should not be construed as restrictive in all aspects but considered as illustrative. The scope of the invention should be determined by reasonable interpretation of the appended claims and all changes that come within the equivalent scope of the invention are included in the scope of the invention.

## Claims

1. A mobile terminal, comprising:
a body (100);
a touchscreen (151) coupled to the body (100);
a short-range communication unit (114); and
a controller (180) configured to:
cause the touchscreen (151) to display receipt information associated with a payment made via a first payment terminal (200); and
transmit, via the short-range communication unit (114), information associated with cancellation of the payment to a second payment terminal (200) while the receipt information associated with the payment is displayed on the touchscreen (151).

2. The mobile terminal of claim 1, wherein the controller (180) is further configured to:
transmit, via the short-range communication unit (114), the information in response to the mobile terminal entering a communication range of the second payment terminal (200).

3. The mobile terminal according to any one of claims 1 and 2, wherein the controller (180) is further configured to:
transmit, via the short-range communication unit (114), the information in response to authentication of a cancellation request at the mobile terminal.

4. The mobile terminal according to any one of claims 1 to 3, wherein the receipt information is one or more of a paid payment amount, paid product information, payment method information used for the payment, or payment method information different from the payment method information used for the payment.

5. The mobile terminal according to any one of claims 1 to 4, wherein the first payment terminal (200) is same as the second payment terminal (200).

6. The mobile terminal according to any one of claims 1 to 5, wherein the controller (180) is further configured to:
determine that the mobile terminal has entered a communication range of the second terminal based on a specific signal received from the second terminal via the short-range communication unit (114), and
wherein the transmitting of the information associated with the cancellation of the payment occurs in response to the determining that the mobile terminal has entered the communication range.

7. The mobile terminal according to any one of claims 1 to 6, wherein the controller (180) is further configured to:
cause the touchscreen (151) to display cancellation receipt information associated with cancellation of the payment when information associated with a completed cancellation is received from the second terminal subsequent to transmitting the information associated with the cancellation of the payment.

8. The mobile terminal of claim 7, wherein the receipt information and the cancellation receipt information are displayed simultaneously for a period of time on the touchscreen (151).

9. The mobile terminal according to any one of claims 1 to 8, wherein the controller (180) is further configured to:
cause the touchscreen (151) to display information associated with the payment when the mobile enters communication range with the second payment terminal (200) via the short-range communication unit (114), wherein the type of the displayed information associated with the payment varies based on whether a preset condition is satisfied.

10. The mobile terminal of claim 9, wherein the controller (180) is further configured to:
cause the touchscreen (151) to display first screen information associated with the payment when the preset condition is not satisfied; and
cause the touchscreen (151) to display second screen information associated with the payment when the preset condition is satisfied, wherein the second screen information is different from the first screen information.

11. The mobile terminal according to any one of claims 1 to 10, wherein the controller (180) is further configured to:
cause the touchscreen (151) to display the receipt information associated with the payment when the mobile is within communication range with the second payment terminal (200) via the short-range communication unit (114).

12. The mobile terminal according to any one of claims 1 to 11, wherein the controller (180) is further configured to:
cause the touchscreen (151) to display receipt information based on a preset type of touch applied to the touchscreen (151), and
cause the touchscreen (151) to display different screen information associated with receipt information based on a type of touch applied to the touchscreen (151),
wherein the controller (180) is configured to cause the touchscreen (151) to display one receipt information when a preset first type of touch is applied thereto, and to display a list including at least one receipt information when a preset second type of touch different from the preset first type of touch is applied thereto.

13. The mobile terminal according to any one of claims 1 to 12, wherein the controller (180) is further configured to:
perform a different operation based on screen information displayed on the touchscreen (151) when the body (100) enters the region,
wherein the controller (180) is further configured to:
perform a first operation when the mobile terminal enters the region while the one receipt information is displayed on the touchscreen (151); and
perform a second operation different from the first operation when the mobile terminal enters the region while a list including at least one receipt information is displayed on the touchscreen (151),
wherein the first operation is an operation of transmitting information associated with the cancellation of a payment corresponding to the displayed receipt information to the second payment terminal (200), and
the second operation is an operation of controlling the touchscreen (151) to display receipt information associated with a payment that has been carried out through the first payment terminal (200) among the at least one receipt information in a visually differentiated manner from the remaining receipt information.

14. The mobile terminal according to any one of claims 1 to 13, wherein the receipt information includes a first image corresponding to payment method information, and
the first image is changed to a second image corresponding to a different payment method based on a preset type of touch applied thereto, and wherein the controller (180) is further configured to:
transmit via the short-range communication unit (114) the different payment method information to the second terminal to perform the payment again with the different payment method when the body (100) enters the region in a state that the first image contained in the receipt information has been changed to the second image.

15. The mobile terminal according to any one of claims 1 to 14, wherein the receipt information includes product information, and wherein the controller (180) is further configured to:
transmit via the short-range communication unit (114) information associated with the cancellation of the payment, and information associated with a payment of a remaining product information other than at least one product information, when the mobile terminal enters the region while the at least one product information included in the receipt information is selected.
